# EUROPÄISCHE PATENTANMELDUNG

(11) **EP 4 393 853 A1**
(43) Veröffentlichungstag der Anmeldung: **03.07.2024**
(21) Anmeldenummer: 23210415.8
(22) Anmeldetag: 16.11.2023
(51) Int. Cl.: B65G 47/53, B65G 47/76, B65G 47/84, B65G 47/94, B65G 47/82

(54) **VORRICHTUNG ZUR ÜBERGABE VON EINZELNEN FÖRDERGÜTERN AN EINE WEITERFÖRDERVORRICHTUNG SOWIE EIN FÖRDERSYSTEM UND EIN ÜBERGABEVERFAHREN**

(30) Priorität: 18.11.2022 CH 13762022
(71) Anmelder: FERAG AG, 8340 Hinwil (CH)
(72) Erfinder: FENILE, Roberto, 8340 Hinwil (CH)
(74) Vertreter: Frei Patent Attorneys

(57) **Zusammenfassung**

Die Erfindung betrifft eine Vorrichtung (1.3) zur Übergabe von einzelnen Fördergütern (2), insbesondere Liegeware, an eine Weiterfördervorrichtung (50.1), insbesondere an einen Sorter, enthaltend eine Übergabefördereinrichtung (10.1) mit einer Auflagefläche (3) für die Fördergüter (2) zum liegenden Fördern der Fördergüter (2) in eine Förderrichtung (F1) und eine Ablenkeinrichtung (5.2) zum Ablenken, und insbesondere zum Bewegen der Fördergüter (2) quer zur Förderrichtung (F 1) auf eine Auflagefläche (53) der Weiterfördervorrichtung (50.1).

## Beschreibung

Die Erfindung liegt auf dem Gebiet der Fördertechnik und betrifft eine Vorrichtung zur Übergabe von einzelnen Fördergütern, insbesondere Liegeware, an eine Weiterfördervorrichtung, insbesondere an einen Sorter. Die Vorrichtung enthält eine Übergabefördereinrichtung mit einer Auflagefläche für die Fördergüter zum liegenden Fördern der Fördergüter in eine Förderrichtung und eine Ablenkeinrichtung zum Ablenken, und insbesondere zum Bewegen der Fördergüter quer zur Förderrichtung auf eine Auflagefläche der Weiterfördervorrichtung.

Die Erfindung betrifft überdies ein Fördersystem, insbesondere ein Sortiersystem mit einer Übergabevorrichtung und einer Weiterfördervorrichtung, insbesondere einem Sorter, sowie ein dazugehöriges Verfahren.

Durch den zunehmenden Online-Handel werden in Umschlagzentren immer grössere Mengen von Fördergütern, wie Pakete, verarbeitet. Die grossen Mengen an Fördergütern sind eine grosse Herausforderung für die Umschlagzentren. So sollen die Fördergüter in den Umschlagzentren möglichst speditiv und fehlerfrei verarbeitet werden, damit diese ihren Empfänger schnellstmöglich erreichen.

In den Umschlagzentren werden die eintreffenden Fördergüter in Sortier- und Verteilsysteme eingespiesen. Hierzu werden die eintreffenden Fördergüter auf die Förderfläche eines Bereitstellungsförderers aufgelegt, welcher die Fördergüter einer Übergabevorrichtung zufördert. Die Übergabevorrichtung übergibt die Fördergüter taktsynchron an einen Sorter.

Der Sorter kann beispielsweise als so genannter Kippschalenförderer ausgebildet sein, welcher zum Abgeben von Fördergütern kippbare Förderschalen aufweist. Mittels des Kippschalenförderers werden die Fördergüter in Kippschalen an Abgabestellen vorbei gefördert. Sobald das Fördergut die richtige Abgabestelle erreicht hat, wird die Kippschale über einen Kippmechanismus in eine Schrägstellung versetzt und die Fördergüter gleiten an der betreffenden Abgabestelle seitlich von der Förderschale ab.

Die Verarbeitung von schweren Fördergütern stellt besondere Anforderungen an ein solches Fördersystems, insbesondere an eine Übergabevorrichtung eines solchen Fördersystems. So muss das Fördersystem bzw. die Übergabevorrichtung zum Fördern bzw. Bewegen von schweren Fördergüter ausgelegt sein. Andererseits müssen die schweren Fördergüter auch mit grösstmöglicher Sorgfalt behandelt werden, um Beschädigungen zu vermeiden.

Bei der Auslegung des Fördersystems bzw. der Übergabevorrichtung dürfen auch die durch das hohe Gewicht der Fördergüter auftretenden, hohen Trägheitskräfte sowie die ebenfalls durch das hohe Gewicht auftretende hohe Haft- und Gleitreibung, welche zwischen dem Fördergut und der Auflagefläche auftritt, nicht ausser Acht gelassen werden. Hohe Reibungskräfte erschweren das Bewegen der Fördergüter über die Auflagefläche.

Es ist nun eine Aufgabe der vorliegenden Erfindung, ein Übergabevorrichtung insbesondere für ein Sortiersystem vorzuschlagen, welche insbesondere zur Übergabe von schweren Fördergütern an eine Weiterfördervorrichtung, wie Sorter, ausgelegt ist.

Ferner soll die Übergabevorrichtung insbesondere eine takt-synchrone Übergabe von, insbesondere schweren Fördergütern an eine Weiterfördervorrichtung ermöglichen.

Die Übergabevorrichtung soll eine möglichst schonende Übergabe der Fördergüter an die Weiterfördervorrichtung gewährleisten. Trotzdem soll durch die schonende Übergabe der Fördergüter die Verarbeitungsgeschwindigkeit der Weiterfördervorrichtung bzw. des Sorters nicht beeinträchtigt werden.

Wenigstens eine Aufgabe wird mit den Merkmalen der unabhängigen Ansprüche 1, 16 und 20 gelöst. Die abhängigen Ansprüche sowie die Beschreibung und die Figuren beinhalten besondere Ausführungsformen und Weiterbildungen der Erfindung.

Die Erfindung betrifft also eine Vorrichtung zur Übergabe von Fördergütern, insbesondere Liegeware, an eine Weiterfördervorrichtung, insbesondere an einen Sorter, enthaltend eine Übergabefördereinrichtung mit einer Auflagefläche für die Fördergüter zum liegenden Fördern der Fördergüter in eine Förderrichtung und eine Ablenkeinrichtung zum Ablenken, und insbesondere zum Bewegen der Fördergüter quer zur Förderrichtung auf eine Auflagefläche der Weiterfördervorrichtung.

Die Übergabevorrichtung bildet einen Übergabebereich aus, in welchem die Fördergüter mittels der Ablenkeinrichtung entlang einer Übergabestrecke an die Weiterfördervorrichtung übergeben werden. Die Übergabestrecke verläuft insbesondere parallel zur Förderrichtung der Übergabefördereinrichtung.

Unter dem Begriff "Auflagefläche" ist allgemein die Oberfläche eines Auflageorgans zu verstehen, welcher das Fördergut flächig aufliegen kann. Die Auflagefläche kann, braucht aber nicht, eine durchgängige Fläche ausbilden. Die Auflagefläche kann vielmehr auch Unterbrüche oder Durchbrüche aufweisen. Die Auflagefläche kann insbesondere auch durch eine Vielzahl von Auflagepunkten definiert sein, wie sie beispielsweise bei einem Rollenteppich vorliegen. Die Auflagefläche ist insbesondere horizontal ausgerichtet.

Die Auflagefläche kann durch die Förderfläche eines Förderorgans ausgebildet werden.

Das Förderorgan ist insbesondere flächig ausgebildet. Das Förderorgan bildet insbesondere eine durchgängige Förderfläche aus.

Das Förderorgan ist insbesondere angetrieben.

Das Förderorgan ist insbesondere umlaufend angeordnet. So kann das umlaufende Förderorgan über Umlenkorgane, insbesondere Umlenkrollen geführt sein.

Die Förderfläche des Förderorgans kann zur Übergabe der Fördergüter an die Weiterfördervorrichtung eine, insbesondere zur Weiterfördervorrichtung hin geneigte Position einnehmen.

So kann die Übergabefördereinrichtung einen der folgenden Förderer enthalten oder daraus bestehen:
Bandförderer, wobei das Förderorgan ein Förderband ist;
Mattenkettenförderer, wobei das Förderorgan eine Mattenkette ist;
Plattenkettenförderer, wobei das Förderorgan eine Plattenkette ist,
Modulbandförderer, wobei das Förderorgan ein Modulband ist.

Die Übergabefördereinrichtung kann auch ein Quergurtförderer sein, bei welchem das umlaufende Förderorgan eine Mehrzahl von in Förderrichtung bzw. Umlaufrichtung hintereinander und parallel zueinander angeordnete Quergurteinheiten enthält. Jede Quergurteinheit enthält einen quer zur Förderrichtung umlaufend antreibbaren Gurt zum Bewegen eines aufliegenden Fördergutes quer zur Förderrichtung zur Weiterfördervorrichtung. Der umlaufende Gurt wird insbesondere über Umlenkrollen umgelenkt.

Die Auflagefläche kann auch aus einer Mehrzahl von Rollen ausgebildet werden, welchen das Fördergut aufliegt. Die Rollen können einen Rollenteppich bzw. eine Rollenbahn ausbilden. Die Rollen können in einer zweidimensionalen Ebene z. B. z. B. in Reihen und Spalten angeordnet sein.

Die Rollen können jeweils in eine oder mehrere Richtungen drehbar sein. Die Rollen können z. B. eine Drehachse quer zur Förderrichtung aufweisen, so dass die Fördergüter über die drehenden Rollen in Förderrichtung bewegbar sind. Die Rollen können alternativ oder zusätzlich eine Drehachse parallel zur Förderrichtung aufweisen, so dass die Fördergüter über die drehenden Rollen quer zur Förderrichtung zur Weiterfördervorrichtung hin bewegbar sind.

Die Rollen können in einer Halterungseinrichtung drehbar gehaltert sein. Die Halterungseinrichtung kann selbst Teil der Auflagefläche sein, insbesondere wenn die Rollen höhenverstellbar sind.

Die Rollen können angetrieben sein, insbesondere in Förderrichtung. Die angetriebenen Rollen bilden insbesondere das Förderorgan zur Förderung der Fördergüter in Förderrichtung aus.

Die Rollen können nicht angetrieben sein. Die Rollen können insbesondere frei drehbar gelagert sein, insbesondere quer zur Förderrichtung. Man spricht auch von Freilauf. Die Rollen sind insbesondere passiv durch ein über diese hinweg bewegtes Fördergut bewegbar.

Die Fördergüter werden in diesem Fall insbesondere über ein separates Förderorgan in Förderrichtung bewegt. Dieses kann z. B. durch umlaufende Mitnehmer ausgebildet sein, wie weiter unten noch näher erläutert.

Die Rollen können auch Teil eines umlaufenden Förderorgans sein. Die Rollen sind insbesondere in einen Trägerkörper des Förderorgans eingebettet. Die Rollen werden gemeinsam mit dem Förderorgan umlaufend bewegt. Das Förderorgan mit den Rollen kann flächig ausgebildet sein. Der Trägerkörper des Förderorgan mit Rollen kann ein Förderband, eine Mattenkette, ein Plattenkette oder eine Modulbandkette sein.

Die Rollen eines solchen Förderorgans können wie oben beschrieben angetrieben sein oder frei drehbar gelagert sein. Sind die Rollen angetrieben, so können die angetriebenen Rollen den Fördergütern eine die Bewegung des umlaufenden Förderorgans überlagernde (Förder-) Bewegung verleihen. Angetriebene Rollen können die Fördergüter auch in eine Bewegung quer zur Förderrichtung zur Weiterfördervorrichtung hin versetzen.

Sind die, insbesondere nicht angetriebenen Rollen quer zur Förderrichtung frei drehbar, d.h. im Freilauf, so gewährleisten diese insbesondere eine reibungsarme Bewegung der Fördergüter quer zur Förderrichtung zur Weiterfördervorrichtung hin.

Die Auflagefläche der Übergabefördervorrichtung kann auch durch einen Auflagetisch ausgebildet sein. Dieser ist insbesondere stationär. Die Fördergüter werden in diesem Fall insbesondere über ein separates Förderorgan in Förderrichtung bewegt. Dieses kann z. B. durch umlaufende Mitnehmer ausgebildet sein, wie nachfolgend noch näher erläutert.

Die Übergabefördereinrichtung kann umlaufende Funktionselemente zum Mitnehmen, Schieben, Ausrichten und/oder Leiten der Fördergüter und/oder zur Ausbildung von Förderabteilen im Förderraum oberhalb der Auflagefläche enthalten.

Die Funktionselemente stehen der Auflagefläche vor. Die umlaufend geführten Funktionselemente sind beispielsweise miteinander verkettet.

Sind die Funktionselemente zur Mitnahme der Fördergüter in Förderrichtung ausgelegt, so sind die Funktionselemente insbesondere als Mitnehmer zur Ausbildung eines Mitnahmekontaktes ausgebildet. Die Mitnehmer werden hierzu gegenüber dem Fördergut insbesondere nachlaufend bewegt und bilden insbesondere mit dem nachlaufenden Ende des Förderguts den Mitnahmekontakt aus.

Gemäss einer Weiterbildung der Erfindung bildet die Übergabefördereinrichtung physische Förderabteile zur Aufnahme jeweils eines Fördergutes aus. Die Förderabteile können durch vorgenannte Funktionselemente, wie Trennleisten, ausgebildet werden. Die Funktionselemente haben folglich die Funktion von Separatoren bzw. Trennorganen.

Es versteht sich von selbst, dass die Funktionselemente auch mehrere Funktionen erfüllen können. So können die Funktionselemente einerseits als Mitnehmer ausgebildet sein und andererseits auch als Separatoren bzw. Trennorgane zur Ausbildung von Aufnahme- bzw. Förderabteilen dienen. Die Separatoren bzw. Trennorgane teilen die Auflagefläche insbesondere in einzelne Aufnahmeabteile bzw. Förderabteile für die einzelnen Fördergüter ein.

Es können beispielsweise jeweils mehrere quer zur Förderrichtung voneinander beabstandet in Reihe angeordnete Funktionselemente vorgesehen sein. Entlang der Umlaufbahn der Funktionselemente können eine Mehrzahl von hintereinander und voneinander beabstandete, insbesondere gleichmässig voneinander beabstandete Reihen von Funktionselemente vorgesehen sein.

Die Reihen von Funktionselementen bilden insbesondere sich quer zur Förderrichtung erstreckende Separatoren bzw. Trennorgane aus. So sind in Förderrichtung bzw. entlang der Umlaufbahn der Funktionselemente insbesondere mehrere voneinander beabstandet, insbesondere gleichmässig beabstandet angeordnete Separatoren vorgesehen.

Anstelle von Reihen aus mehreren Funktionselementen können auch einzelne, sich quer zur Förderrichtung erstreckende Leisten vorgesehen sein.

Die Funktionselemente können Nocken, Nasen, Stifte, Zapfen oder Leisten sein.

Die Funktionselemente können z. B. an einem, die Auflagefläche ausbildenden Förderorgan angebracht sein. Entsprechend werden die Funktionselemente synchron zum Förderorgan bewegt. In diesem Fall können die Funktionselemente insbesondere Leisten sein, welche sich jeweils quer über die Auflagefläche erstrecken.

Die Funktionselemente können auch Teil eines von der Auflagefläche für die Fördergüter unabhängigen Förderorgans sein. In diesem Fall haben die Funktionselemente insbesondere die Funktion von Mitnehmern.

So können die Funktionselemente in parallel zur Förderrichtung verlaufenden, in der Auflagefläche angeordneten Schlitz- bzw. Spaltführungen bewegbar sein. Die Auflagefläche kann hier z. B. durch einen Auflagetisch, einen Rollenteppich oder durch in Förderrichtung parallel zueinander angeordnete Fördergurten ausgebildet werden.

Entspricht die Auflagefläche der Förderfläche eines Förderorgans, so sind die Funktionselemente in Funktion als Mitnehmer insbesondere unabhängig vom Förderorgan entlang einer geschlossenen Umlaufbahn in Förderrichtung bewegbar.

Gemäss einem ersten Typ von Ablenkeinrichtung enthält diese mindestens einen Schiebekörper zum Schieben der Fördergüter quer zur Förderrichtung über die Auflagefläche der Übergabefördereinrichtung auf eine Auflagefläche der Weiterfördervorrichtung. Dem mindestens einen Schiebekörper ist ein Wirkbereich über der Auflagefläche zugeordnet, in welchem dieser das Fördergut zur Weiterfördervorrichtung hin schieben kann.

Der mindestens eine Schiebekörper zeichnet sich insbesondere durch eine lineare Schiebebewegung aus. Die Schiebebewegung umfasst insbesondere eine Bewegungskomponente quer zur Förderrichtung der Übergabefördervorrichtung. Die Schiebebewegung verläuft insbesondere quer zur Förderrichtung der Übergabefördervorrichtung.

Gemäss einer Ausführungsvariante weist der Schiebekörper keine Bewegungskomponente parallel zur Förderrichtung auf.

Der mindestens eine Schiebekörper zeichnet sich ferner insbesondere durch eine Vorwärts- und Rückwärtsbewegung, also einem Vorwärts- und Rückwärtshub entlang einer gemeinsamen linearen Bewegungsbahn aus.

Der mindestens eine Schiebekörper ist insbesondere über die Auflagefläche der Übergabefordereinrichtung bewegbar. Das heisst, die Bewegungsbahn des Schiebekörpers ist insbesondere oberhalb der Auflagefläche angeordnet.

Die Bewegungsbahn der Schiebekörper verläuft insbesondere oberhalb der Auflagefläche bzw. Förderfläche. Enthält die Übergabefördereinrichtung umlaufende Funktionsorgane der oben beschriebenen Art, so ist der mindestens eine Schiebekörper insbesondere über die Funktionsorgane der Übergabefördereinrichtung hinweg bewegbar. Das heisst, die Bewegungsbahn des Schiebekörpers ist insbesondere oberhalb der Funktionsorgane angeordnet.

Der Schiebekörper bildet insbesondere eine Kontaktfläche zur Herstellung eines Schiebekontaktes mit dem Fördergut aus. Die Kontaktfläche verläuft insbesondere parallel zur Förderrichtung der Übergabefördereinrichtung. Der Schiebekörper enthält insbesondere ein Kontaktorgan mit der Kontaktfläche.

Der Schiebekörper kann z. B. T-förmig ausgebildet sein und einen quer zur Förderrichtung verlaufenden Stabkörper sowie ein quer zum Stabkörper verlaufendes, die Kontaktfläche ausbildendes Kontaktorgan umfassen.

Die Kontaktfläche des mindestens einen Schiebekörpers ist insbesondere in Förderrichtung beweglich ausbildet, so dass die Kontaktfläche mit einem in Förderrichtung mit der Übergabefordereinrichtung geförderten Fördergut mitbewegbar ist.

Es hat sich nämlich gezeigt, dass schwere Fördergüter aufgrund ihres hohen Gewichts nur vergleichsweise langsam zur Weiterfördervorrichtung hin verschoben werden können. Dies führt dazu, dass das Fördergut während der Übergabe nicht nur quer zur Förderrichtung bewegt wird, sondern auf der Auflagefläche der Übergabefördereinrichtung auch eine vergleichsweise lange Wegstrecke in Förderrichtung zurücklegt. Wird nun ein Schiebekörper quer zur Förderrichtung bewegt, so findet während der Übergabe des Fördergutes eine Relativbewegung zwischen dem Fördergut und der Kontaktfläche des Schiebekörpers statt. Dies führt zu erhöhter Gleitreibung zwischen Fördergut und Schiebekörper, wodurch das Fördergut beschädigt werden kann.

Durch eine bewegliche Kontaktfläche kann diese Problematik beseitigt werden, da mittels der beweglichen Kontaktfläche die Gleitreibung aufgrund der genannten Relativbewegung zwischen Fördergut und Schieberorgan vermieden wird.

Die in Förderrichtung bewegliche Kontaktfläche kann realisiert sein, indem der mindestens eine Schiebekörper selbst in Förderrichtung bewegbar ist.

Die in Förderrichtung bewegliche Kontaktfläche kann realisiert sein, indem ein die Kontaktfläche ausbildendes Kontaktorgan am mindestens einen Schiebekörper und relativ zu diesem in Förderrichtung bewegbar ist.

Das Kontaktorgan kann ein um Umlenkrollen geführtes, umlaufendes Kontaktband sein. Der Schiebekontakt zwischen Fördergut und Schiebekörper erfolgt über das Kontaktband. Das Kontaktband kann aktiv angetrieben sein, z. B. über eine motorisch angetriebene Umlenkrolle. Das Kontaktband kann auch passiv antreibbar sein, z. B. durch das sich in Förderrichtung bewegende Fördergut, welches mit dem Kontaktband einen Schiebekontakt ausbildet.

Das Kontaktorgan kann auch durch drehbar gelagerte Kontaktrollen ausgebildet sein. Der Schiebekontakt zwischen Fördergut und Schiebekörper erfolgt über die Kontaktrollen. Es können in Förderrichtung mehrere Kontaktrollen hintereinander angeordnet sein. Es können auch Kontaktrollen untereinander angeordnet sein. Die Drehachsen der Kontaktrollen sind insbesondere senkrecht zur Auflagefläche.

Die Kontaktrollen können aktiv angetrieben sein, z. B. über wenigstens einen Antriebsmotor. Die Kontaktrollen können auch frei drehend gelagert und passiv antreibbar sein, z. B. durch das sich in Förderrichtung bewegende Fördergut, welches mit den Kontaktrollen einen Schiebekontakt ausbildet.

Gemäss einer Variante umfasst die Ablenkeinrichtung einen Schiebekörper bzw. exakt einen Schiebekörper. Die Kontaktfläche des Schiebekörpers erstreckt sich in Förderrichtung der Übergabefördereinrichtung insbesondere über mehrere Förderabteile der Weiterfördervorrichtung hinweg. Das heisst, die Länge der Kontaktfläche in Förderrichtung der Übergabefördereinrichtung ist insbesondere grösser als die anderthalbfache Länge eines Förderabteils und ganz besonders gleich gross oder grösser als die Summe der Länge von mindestens zwei Förderabteilen der Weiterfördervorrichtung in Längsrichtung der Weiterfördervorrichtung.

Gemäss einer anderen Variante umfasst die Ablenkeinrichtung mindestens zwei bzw. mehrere, in Förderrichtung der Übergabefördereinrichtung hintereinander angeordnete Schiebekörper. Die Schiebekörper sind insbesondere individuell quer zur Förderrichtung bewegbar. Die Länge der Kontaktfläche der Schiebekörper in Förderrichtung der Übergabefördereinrichtung ist jeweils insbesondere gleich oder kleiner als die Länge eines Förderabteils der Weiterfördervorrichtung in Förderrichtung der Weiterfördervorrichtung.

Die oben genannte Anordnung von mehreren Schiebekörpern dient einem abgestuften bzw. gestaffelten Schieben der Fördergüter quer zur Förderrichtung auf eine Auflagefläche der Weiterfördervorrichtung. Hierbei wird der Schiebehub bzw. Vorwärtshub auf mehrere Schiebekörper aufgeteilt. Das heisst, das Fördergut wird mittels mindestens zwei Schiebekörpern in mindestens zwei Teilhüben auf die Auflagefläche der Weiterfördervorrichtung geschoben. Die Teilhübe erfolgen jeweils entlang einer Teilstrecke einer Übergabestrecke.

So wird ein mit der Übergabefördereinrichtung in Förderrichtung gefördertes Fördergut in den Wirkbereich eines ersten Schiebekörpers gefördert. Der Schiebekörper schiebt das Fördergut in einem Teilhub in Richtung Weiterfördervorrichtung. Gleichzeitig wird das Fördergut durch die Übergabefördereinrichtung in Förderrichtung weitergefördert und gelangt in den Wirkbereich eines zweiten, dem ersten Schiebekörper nachgelagerten zweiten Schiebekörper. Der zweite Schiebekörper schiebt nun das Fördergut mit einem weiteren Teilhub weiter in Richtung bzw. auf die Auflagefläche der Weiterfördervorrichtung. Weitere Schiebekörper, welche weitere Teilhübe auf das Fördergut ausüben, können folgen.

Bei der Ausübung eines Teilhubes befindet sich der zweite und gegebenenfalls weitere Schiebekörper gegenüber der Position des ersten bzw. des vorangehenden Schiebekörpers insbesondere in einer Vorschubposition über der Auflagefläche des Fördergutes. Die Vorschubposition erlaubt eine schnelle Ausbildung eines Schiebekontaktes sobald das Fördergut den Wirkbereich des entsprechenden Schiebekörpers erreicht. Die jeweilige Vorschubposition liegt jeweils insbesondere auf Höhe der Position des vorangehenden Schiebekörpers nach Ausführung des Teilhubs oder dahinter. Allerdings ist eine Vorschubposition nicht zwingend notwendig.

Diese Ausführungsvariante findet beispielsweise zusammen mit einer Weiterfördervorrichtung Anwendung, welche Förderabteile ausbildet.

Die Länge der Schiebekörper und deren Wirkbereiche in Förderrichtung korrespondiert insbesondere mit der Länge der Förderabteile bzw. mit der Teilung der Abteile der Weiterfördervorrichtung in Förderrichtung.

Die Schiebekörper werden insbesondere taktsynchron zu den Förderabteilen der Weiterfördervorrichtung bewegt, so dass das Fördergut mit dem letzten Teilhub taktsynchron in ein Förderabteil der Weiterfördervorrichtung geschoben wird.

Beim Schieben des Fördergutes in das Förderabteil der Weiterfördervorrichtung sind die Schiebekörper insbesondere auf die Förderabteile der Weiterfördereinrichtung ausgerichtet.

Die taktsynchrone Bewegung der Schiebekörper erlaubt auch die gleichzeitige Ausführung eines Übergabeverfahrens für mindestens zwei Fördergüter, wobei sich jeweils immer ein Fördergut im Wirkbereich eines Schiebekörpers befindet.

Die Aufteilung des Übergabehubs in Teilhübe, welche von mehreren Schiebekörpern ausgeführt werden, erlaubt eine Übergabe der schweren und trotzdem empfindlichen Fördergüter mit einer geringeren Geschwindigkeit. Dies, ohne dass die Geschwindigkeit der Weiterfördervorrichtung reduziert werden muss. Dadurch werden die Beschleunigungen klein gehalten was eine schonende Übergabe der Fördergüter erlaubt.

Gleichzeitig wird mit der Anordnung der Schiebekörper hintereinander in Förderrichtung auch der während der Übergabe zurückgelegte Förderweg in Förderrichtung mitberücksichtigt, indem das Förderorgan die Förderorgane vom einen Schiebekörper zum nächsten fördert.

Gemäss einem zweiten Typ von Ablenkeinrichtung enthält diese einen Rundlauf mit mehreren entlang einer geschlossenen Bewegungsbahn hintereinander angeordneten Schiebekörpern zum Schieben der Fördergüter quer zur Förderrichtung auf eine Auflagefläche der Weiterfordervorrichtung.

Die Schiebekörper sind insbesondere miteinander verkettet. Die Schiebkörper sind insbesondere entlang der Umlaufbahn voneinander beabstandet.

Der Rundlauf ist so ausgebildet, dass die Schiebekörper in ihrem Wirkbereich, in welchem diese die Fördergüter zur Weiterfördervorrichtung hin schieben, sowohl eine Bewegungskomponente quer zur Förderrichtung als auch eine Bewegungskomponente in Förderrichtung aufweisen.

Die geschlossene Bewegungsbahn der Schiebekörper ist insbesondere oberhalb der Auflagefläche angeordnet.

Die geschlossene Bewegungsbahn der Schiebekörper ist insbesondere parallel zur Auflagefläche der Übergabefördereinrichtung angeordnet.

Die geschlossene Bewegungsbahn der Schiebekörper verläuft insbesondere horizontal.

Der Rundlauf ist insbesondere oberhalb der Auflagefläche der Übergabefördereinrichtung angeordnet.

Der Schiebekörper enthält jeweils ein Kontaktorgan mit einer Kontaktfläche zur Ausbildung eines Schiebekontaktes mit dem zu übergebenen Fördergut. Die Kontaktfläche bzw. das Kontaktorgan kann unter anderem über ein Knickgelenk mit einem Stützorgan des Schiebekörpers verbunden und gegenüber diesem beweglich sein. Die Stützorgane der Schiebekörper können Teil eines umlaufenden Transportorgans sein, mittels welchem die Schiebekörper entlang der geschlossenen Umlaufbahn bewegt. Die Stützorgane können auch mit einem umlaufenden Transportorgan verbunden sein.

Das Knickgelenk gewährleistet eine parallele Ausrichtung der Kontaktfläche entlang einer Kurvenbahn. Das Knickgelenk kann über ein Federelement vorgespannt sein und insbesondere über eine Kulissenführung zwischen einer geknickten und einer gestreckten Position bewegbar sein.

Die Schiebekörper sind im Wirkbereich insbesondere auf die Förderabteile der Weiterfördervorrichtung ausgerichtet und insbesondere taktsynchron zu diesen bewegbar. Entsprechend weisen die Schiebekörper im Wirkbereich insbesondere die gleiche Teilung auf wie die Förderschalen der Weiterfördervorrichtung.

Gemäss einem dritten Typ von Ablenkeinrichtung enthält diese eine Mehrzahl von in Förderrichtung hintereinander angeordneten Querfördereinheiten zum Bewegen der Fördergüter quer zur Förderrichtung auf eine Auflagefläche der Weiterfördervorrichtung.

Die Querfördereinheiten sind insbesondere Teil eines umlaufenden Förderorgans der Übergabefördereinrichtung. Das heisst, die Querfördereinheiten selbst werden als Teil des Förderorgans entlang einer geschlossenen Umlaufbahn bewegt. Die Querfördereinheiten bilden insbesondere die Förderfläche des Förderorgans aus, welche in Förderrichtung bewegt wird. Das Förderorgan mit den Querfördereinheiten ist beispielsweise um Umlenkrollen umlaufend geführt.

Die Querfördereinheiten können ihrerseits jeweils umlaufend antreibbare, um Umlenkrollen geführte Querfördergurten enthalten.

Die Förderorgane der Querfördereinheiten können individuell oder in Gruppen antreibbar sein.

Solche Fördervorrichtungen sind auch als Quergurtförderer bekannt.

Die Übergabefördereinrichtung kann, z. B. über Funktionselemente, wie Trennleisten, Förderabteile ausbilden, wobei die Breite der Quergurten in Förderrichtung kleiner ist als die Länge der Förderabteile in Förderrichtung. So können beispielsweise in einem Förderabteil in Förderrichtung mehrere Quergurteinheiten hintereinander angeordnet sein.

Die Breite der Quergurten in Förderrichtung kann kleiner sein als die Länge der Förderabteile der Weiterfördervorrichtung in Förderrichtung. So kann beispielsweise die Übergabe eines Fördergutes in ein Förderabteil der Weiterfördervorrichtung über mehrere in Förderrichtung hintereinander angeordnete Quergurteinheiten erfolgen.

Gemäss einem vierten Typ von Ablenkeinrichtung umfasst diese eine Schrägstellungsanordnung zur Überführung der Förderfläche und folglich insbesondere des flächigen Förderorgans in eine zur Weiterfördervorrichtung hin geneigte Position zwecks Übergabe der Fördergüter an die Weiterfördervorrichtung. Das heisst, das Förderorgan ist im Wirkbereich der Ablenkeinrichtung geneigt. Durch die Neigung des Förderorgans rutscht das Fördergut quer zur Förderrichtung auf die Auflagefläche der Weiterfördervorrichtung ab.

Das flächige Förderorgan geht also von einer quer zur Förderrichtung horizontalen Lage in eine zur Weiterfördervorrichtung hin geneigte Lage über. Der Übergang von horizontaler zur geneigten Lage erfolgt insbesondere kontinuierlich. Das flächige Förderorgan kann hierzu eine tordierte Form annehmen.

Im Anschluss an die geneigte Position bzw. Lage kann das Förderorgan durch die Schrägstellungsanordnung in gleicher Weise wieder in eine quer zur Förderrichtung horizontale Position bzw. Lage zurückgeführt werden.

Die Schrägstellungsanordnung ist insbesondere unterhalb des flächigen Förderorgans angeordnet. Die Schrägstellungsanordnung kann für eine permanente Schrägstellung ausgelegt sein. Die Schrägstellungsanordnung kann auch für eine temporäre Schrägstellung zwecks Übergabe eines Fördergutes ausgelegt sein. In diesem Fall umfasst die Schrägstellungsanordnung für die temporäre Schrägstellung einen Bewegungsmechanismus mit Antrieb.

Gemäss einem fünften Typ von Ablenkeinrichtung enthält diese einen über der Auflagefläche angeordneten Querleitkörper zum Ablenken der mit der Übergabefördereinrichtung geförderten Fördergüter quer zur Förderrichtung auf eine Auflagefläche der Weiterfördervorrichtung.

Der Querleitkörper ist während des Betriebs der Übergabevorrichtung insbesondere stationär.

Der Querleitkörper sorgt für eine passive Ablenkung der Fördergüter quer zur Förderrichtung. Der Querleitkörper enthält insbesondere ein Kontaktorgan mit einer Kontaktfläche zur Ausbildung eines Ablenkkontaktes mit den Fördergütern. Die Kontaktfläche verläuft insbesondere schräg über die Auflage der Übergabefördereinrichtung. Die Kontaktfläche gibt eine parallel zu dieser und parallel zur Auflagefläche bzw. Förderfläche verlaufende Ablenkrichtung vor. Die Ablenkrichtung weist eine Richtungskomponente in Förderrichtung der Übergabefördereinrichtung und eine Richtungskomponente quer zur Förderrichtung auf.

Die Kontaktfläche kann in Ablenkrichtung beweglich ausgebildet sein. So kann das Kontaktorgan vergleichbar mit dem Kontaktorgan eines weiter oben beschriebenen Schiebekörpers durch ein um Umlenkrollen geführtes, umlaufendes Kontaktband sein. Der Schiebekontakt zwischen Fördergut und Querleitkörper erfolgt über das Kontaktband. Das Kontaktband kann aktiv angetrieben sein, z. B. über eine motorisch angetriebene Umlenkrolle. Das Kontaktband kann auch passiv antreibbar sein, z. B. durch das sich in Förderrichtung bewegende Fördergut, welches mit dem Kontaktband einen Ablenkkontakt ausbildet.

Das Kontaktorgan kann durch drehbar gelagerte Kontaktrollen ausgebildet sein. Der Ablenkkontakt zwischen Fördergut und Querleitkörper erfolgt über die Kontaktrollen. Die Kontaktrollen können in Ablenkrichtung hintereinander angeordnet sein. Die Drehachsen der Kontaktrollen sind insbesondere senkrecht zur Auflagefläche.

Die Kontaktrollen können aktiv angetrieben sein, z. B. über wenigstens einen Antriebsmotor. Die Kontaktrollen können auch frei drehend gelagert und passiv antreibbar sein, z. B. durch das sich in Förderrichtung bewegende Fördergut, welches mit den Kontaktrollen einen Ablenkkontakt ausbildet.

Die Vorrichtung zur Übergabe von einzelnen Fördergütern an eine Weiterfördervorrichtung kann eine Bereitstellungseinrichtung zum Bereitstellen und Abgeben bzw. Übergeben von Fördergütern an die Übergabefördereinrichtung enthalten.

Die Bereitstellungseinrichtung kann einen oder mehrere hintereinander angeordnete Bandförderer enthalten.

Die Bereitstellungseinrichtung kann eine Stauanordnung zum Stauen von Fördergüter enthalten. Entsprechend bildet die Bereitstellungseinrichtung entlang des mindestens einen Bandförderers eine Staustrecke aus. Die Stauanordnung kann ein an die Staustrecke anschliessendes Entlassungsorgan zum Entlassen einzelner Fördergüter zur Übergabefördereinrichtung hin aufweisen.

Die Bereitstellungseinrichtung ist insbesondere mit einer Steuerungseinrichtung zur taktsynchronen Abgabe von einzelnen Fördergütern an die Übergabefördereinrichtung verbunden. Die Abgabe ist hierbei insbesondere (auch) taktsynchron gegenüber der Weiterfördervorrichtung.

Die Erfindung betrifft auch ein Fördersystem, enthaltend eine oben beschriebene Vorrichtung zur Übergabe von Fördergütern an eine Weiterfördervorrichtung, sowie eine Weiterfördervorrichtung.

Das Fördersystem enthält ferner insbesondere eine Steuerungseinrichtung zur Steuerung, insbesondere zur taktsynchronen Steuerung der Übergabe von einzelnen Fördergütern an die Weiterfördervorrichtung.

Das Fördersystem ist insbesondere ein Sortiersystem zur gezielten Verteilung von Fördergütern. Die Weiterfördervorrichtung ist in diesem Fall ein Sorter. So dient das Sortiersystem beispielsweise der Sortierung von Paketen, z. B. nach Zielort, Form (Geometrie), Grösse oder Gewicht. Ein solcher Sorter ist beispielsweise in der Beschreibungseinleitung umschrieben.

Das Fördersystem kann zur Befüllung sämtlicher Förderplätze bzw. Förderabteile und insbesondere Förderschalen der Weiterfördervorrichtung, insbesondere des Sorters, mit Fördergütern durch die Übergabevorrichtung ausgelegt sein.

Das Fördersystem kann auch zur Befüllung einzelner, leerer Förderplätze bzw. Förderabteile und insbesondere Förderschalen der Weiterfördervorrichtung, insbesondere des Sorters, mit Fördergütern durch die Übergabevorrichtung ausgelegt sein. So werden beispielsweise mittels der Übergabevorrichtung insbesondere Lücken im Förderstrom der Weiterfördervorrichtung befüllt.

Die Weiterfördervorrichtung bildet in Förderrichtung jeweils hintereinander angeordnete Förderabteile zur Aufnahme jeweils eines Fördergutes aus.

Die Förderabteile sind insbesondere in Förderrichtung zueinander beabstandet angeordnet. Die Förderabteile sind insbesondere miteinander verkettet. Entsprechend werden die Förderabteile synchron und insbesondere mit gleichbleibenden Abständen zueinander entlang der Förderstrecke bewegt.

Die Förderabteile weisen in Förderrichtung insbesondere dieselbe Länge auf. Das heisst, die Förderabteile weisen in Förderrichtung eine gleichbleibende Teilung auf Die Förderabteile weisen insbesondere die gleiche Grösse auf.

Gemäss einer Ausführungsvariante können die Förderabteile der Weiterfördervorrichtung auch unterschiedlich gross ausgebildet sein und insbesondere unterschiedliche Längen in Förderrichtung aufweisen.

Die Weiterfördervorrichtung kann ein Schalenförderer, insbesondere ein Kippschalenförderer sein, wobei die Förderabteile durch Förderschalen ausgebildet werden.

Die Förderschalen sind entlang der Förderbahn insbesondere hintereinander angeordnet.

Zur Übergabe der Fördergüter kann jeweils eine Seitenwand der Förderschale zur Übergabevorrichtung hin aufklappbar bzw. herunterklappbar sein.

Kippschalen zeichnen sich dadurch aus, dass diese zwecks Abgabe der Fördergüter zur Seite kippbar sind, z. B. nur auf eine oder auf beide Seiten kippbar sind. Die Schalen sind insbesondere über eine angetriebene Förderkette miteinander verbunden.

Eine als Sorter ausgebildete Weiterfördervorrichtung kann, wie bereits in der Beschreibungseinleitung erwähnt, in einer geschlossenen Umlaufbahn an Abgabestationen vorbei geführt sein, an welchen Fördergüter nach bestimmten Sortier- bzw. Verteilkriterien abgegeben werden.

Die Weiterfördervorrichtung und die Übergabefördereinrichtung bzw. deren Förderbahnen verlaufen im Übergabebereich insbesondere parallel nebeneinander. Entsprechend verlaufen auch die Förderrichtungen der Weiterfördervorrichtung und der Übergabefördereinrichtung im Übergabebereich parallel nebeneinander bzw. sind gleich gerichtet.

Die Erfindung betrifft auch ein Verfahren zur Übergabe von Fördergütern von einer Übergabevorrichtung an eine Weiterfördervorrichtung mittels eines oben beschriebenen Fördersystems.

Gemäss Verfahren wird mindestens ein auf der Auflagefläche der Übergabefördereinrichtung liegend gefördertes Fördergut mittels der Ablenkeinrichtung quer zur Förderrichtung der Übergabefördereinrichtung ausgelenkt und auf eine Auflagefläche der Weiterfördervorrichtung übergeben. Die Weiterfördervorrichtung wird insbesondere mit einer gleichbleibenden Fördergeschwindigkeit betrieben.

Die Fördergüter werden von der Bereitstellungseinrichtung insbesondere taktsynchron zur Übergabefördereinrichtung an die Übergabefördereinrichtung, insbesondere in Förderabteile der Übergabefördereinrichtung abgegeben.

Die Fördergüter werden von der Bereitstellungseinrichtung insbesondere taktsynchron zur Weiterfördervorrichtung, insbesondere zu den Förderabteilen der Weiterfördervorrichtung an die Übergabefördereinrichtung, insbesondere in Förderabteile der Übergabefördereinrichtung abgegeben.

Die Übergabe der Fördergüter erfolgt insbesondere taktsynchron zur Bewegung der Förderabteile der Weiterfördervorrichtung. Das Förderorgan der Übergabefördereinrichtung und das Förderorgan der Weiterfördervorrichtung bzw. die Förderabteile der Weiterfördervorrichtung bewegen sich im Übergabebereich insbesondere mit gleicher Geschwindigkeit.

So erfolgt mittels der Steuerungseinrichtung unter Berücksichtigung der Position und Fördergeschwindigkeit der Förderabteile der Weiterfördervorrichtung eine takt-synchrone Übergabe der Fördergüter in die an der Übergabefördereinrichtung vorbei bewegten Förderabteile der Weiterfordervorrichtung.

Allfällige Schiebekörper werden ebenfalls taktsynchron zu den vorbeibewegten Förderabteile der Weiterfördervorrichtung quer zur Förderrichtung der Übergabefördereinrichtung bewegt.

Bildet die Übergabefördereinrichtung ebenfalls Förderabteile aus, so sind diese im Übergabebereich insbesondere auf die Förderabteile der Weiterfördervorrichtung ausgerichtet. Die Förderabteile der Übergabefördereinrichtung und die Förderabteile der Weiterfördervorrichtung weisen im Übergabebereich insbesondere dieselbe Teilung auf.

Die Förderabteile der Übernahmefördereinrichtung werden im Übergabebereich insbesondere taktsynchron zu den Förderabteilen der Weiterfördervorrichtung bewegt. Die Übergabefördereinrichtung und die Weiterfördervorrichtung weisen entsprechend auch dieselbe Fördergeschwindigkeit auf.

Weist die Weiterfördervorrichtung Förderabteile, insbesondere Förderschalen von unterschiedlicher Grösse, d.h. von unterschiedlicher Länge in Förderrichtung auf, so wird dies durch die Steuerungseinrichtung entsprechend berücksichtigt. Das heisst, die Steuerungseinrichtung ist auch bei unterschiedlich grossen bzw. langen Förderabteilen bzw. Förderschalen der Weiterfördervorrichtung für eine taktsynchrone Übergabe der Fördergüter ausgelegt.

Ferner ist die Steuerungseinrichtung dafür ausgelegt, gegebenenfalls mittels Sensoren, welche die Grösse der Fördergüter erfassen, sicherzustellen, dass Fördergüter an ausreichend grosse Förderabteile, wie Förderschalen, der Weiterfördervorrichtung übergeben werden.

Die Bereitstellungseinrichtung, auch Bereitstellungsförderer genannt, ist insbesondere dazu ausgelegt, die Fördergüter in solchen Abständen an die Übergabefördereinrichtung abzugeben, dass diese im Übergabebereich taktsynchron zu den Förderabteile der Weiterfördervorrichtung bewegt werden.

Weisen die Förderabteile der Weiterfördervorrichtung unterschiedliche Grössen und/oder Abstände auf, so werden die Fördergüter insbesondere ebenfalls mit unterschiedlichen Abständen von der Bereitstellungseinrichtung an die Übergabefördereinrichtung abgegeben

Die Bereitstellungseinrichtung ist insbesondere dazu ausgelegt, die Fördergüter in gleichmässigen Abständen an die Übergabefördereinrichtung abzugeben.

Die Fördergüter werden von der Bereitstellungseinrichtung insbesondere taktsynchron zur Übergabefördereinrichtung bzw. zu den Förderabteilen der Übergabefördereinrichtung an die Übergabefördereinrichtung abgegeben.

Die Fördergüter werden von der Bereitstellungseinrichtung insbesondere taktsynchron zur Weiterfördervorrichtung bzw. zu den Förderabteilen der Weiterfördervorrichtung an die Übergabefördereinrichtung abgegeben.

Die Übergabe der Fördergüter an die Weiterfördervorrichtung erfolgt insbesondere über mehrere Fördertakte der Weiterfördervorrichtung entlang einer Übergabestrecke parallel zur Förderrichtung der Übergabefördereinrichtung.

Die Übergabestrecke weist insbesondere eine Länge auf, welche mindestens der doppelten Länge eines Förderabteils der Weiterfördervorrichtung in Förderrichtung entspricht.

Das heisst, die Übergabe der Fördergüter an die Weiterfördervorrichtung dauert über einen Zeitraum von mehreren Fördertakte der Weiterfördervorrichtung. Dadurch erfolgt eine sanfte und schonende Übergabe der Fördergüter an die Weiterfördervorrichtung mit vergleichsweise geringen Beschleunigungen.

Die Übergabe des Fördergutes startet insbesondere mit Beginn der Übergabebewegung des Fördergutes quer zur Förderrichtung der Übergabefördereinrichtung zwecks Übergabe des Fördergutes. Die Übergabe des Fördergutes endet insbesondere mit Einnahme des Förderplatzes auf der Weiterfördervorrichtung durch das Fördergut und dem Ende der Übergabebewegung des Fördergutes quer zur Förderrichtung der Übergabefördereinrichtung.

Die Übergabe der Fördergüter an die Weiterfördervorrichtung über mehrere Takte der Weiterfördervorrichtung wird gemäss dem ersten Typ einer Ablenkeinrichtung beispielsweise durch ein abgestuftes bzw. gestaffeltes Schieben der Fördergüter über mehrere Schiebekörper erzielt.

Auch eine beweglich ausgestaltete Kontaktfläche des Schiebekörpers unterstützt eine Übergabe über mehrere Fördertakte, indem das Fördergut über einen längeren Zeitabschnitt mit dem Schiebekörper in Kontakt bleiben kann, ohne dass problematische Reibungseffekte zwischen Fördergut und Schiebekörper auftreten. Die Kontaktfläche des Schiebekörper erstreckt sich dann, insbesondere wenn die Ablenkeinrichtung nur einen einzelnen Schiebekörper aufweist, in Förderrichtung insbesondere über mehrere Förderabteile der Weiterfördervorrichtung.

Die Übergabe der Fördergüter an die Weiterfördervorrichtung über mehrere Takte der Weiterfördervorrichtung wird gemäss dem zweiten Typ einer Ablenkeinrichtung beispielsweise durch Schiebekörper erzielt, welche sich unter Ausübung einer Schiebebewegung auf das Fördergut quer zur Förderrichtung über mehrere Fördertakte der Weiterfördervorrichtung hinweg über die Auflagefläche hinweg in Förderrichtung bewegen.

Die Übergabe der Fördergüter an die Weiterfördervorrichtung über mehrere Takte der Weiterfördervorrichtung wird gemäss dem dritten Typ einer Ablenkeinrichtung beispielsweise durch einen Querleitkörper erzielt, welcher sich in Förderrichtung über eine Länge von mehreren Förderabteile der Weiterfördereinrichtung über die Auflagefläche der Übergabefördereinrichtung hinweg erstreckt. Das heisst, die Länge des Querleitkörpers in Förderrichtung der Übergabefördereinrichtung ist grösser als die anderthalbfache Länge eines Förderabteils und ganz besonders gleich gross oder grösser als die Summe der Länge von mindestens zwei Förderabteilen der Weiterfördervorrichtung in Längsrichtung der Weiterfördervorrichtung.

Die Übergabe der Fördergüter an die Weiterfördervorrichtung erfolgt insbesondere über eine Wegstrecke der Übergabefördereinrichtung, welche mindestens das Anderthalbfache, insbesondere mindestens das Zweifache der Länge eines Förderabteils der Weiterfördervorrichtung in Förderrichtung misst.

Bei den Fördergütern handelt es sich um Stückgüter bzw. Einzelgüter, insbesondere von unterschiedlicher Geometrie, Form, Oberflächeneigenschaften, Reibeigenschaften, Gleiteigenschaften, Grösse, Gewicht und Konsistenz.

Die Stückgüter bzw. Einzelgüter sind insbesondere verpackte Waren. Die Fördergüter können zum Beispiel Pakete, Schachteln, Kisten, Boxen, Gebinde oder palettierte Waren sein.

Die Fördergüter sind insbesondere Liegeware. Liegeware zeichnet sich durch eine liegende Förderung und einer flächigen Auflage der Fördergüter auf dem Förderorgan bzw. der Auflagefläche aus.

Die Fördergüter werden innerhalb des Fördersystems insbesondere in Form von Warenströmen gefördert.

Die Übergabevorrichtung kann auch die Funktion eines Puffers bzw. Zwischenspeichers ausüben, mittels welcher mindestens ein Fördergut bis zur Übergabe an den Wegförderer zwischengespeichert wird.

Die Übergabevorrichtung zeichnet sich insbesondere durch ihren einfachen Aufbau aus vergleichsweise wenigen Komponenten sowie durch eine schonende und positionsgenaue Übergabe der Fördergüter aus. Durch die vergleichsweise langsame Bewegung der Fördergüter quer zur Förderrichtung der Übergabefördervorrichtung werden Reibungseffekte sowie der Energieverbrauch reduziert. Ferner ermöglichen kleine Übergabegeschwindigkeiten eine gerichtete bzw. positionsgenaue Übergabe.

Nachfolgend wird der Erfindungsgegenstand anhand von Ausführungsbeispielen, welche in den beiliegenden Figuren dargestellt sind näher erläutert. Es zeigen jeweils schematisch:
- Figur 1a-1c:: Draufsichten eines erfindungsgemässen Fördersystems mit einer ersten Variante einer Übergabevorrichtung in verschiedenen Übergabepositionen gemäss eines ersten Typs;
- Figur 1d:: eine perspektivische Ansicht des Fördersystems gemäss den Figuren 1a-1c;
- Figur 2:: eine perspektivische Ansicht eines erfindungsgemässen Fördersystems mit einer gegenüber der Übergabevorrichtung gemäss den Figuren 1a-1d modifizierten Übergabevorrichtung gemäss des ersten Typs;
- Figur 3:: eine Draufsicht eines weiteren Fördersystems mit einer zweiten Variante einer erfindungsgemässen Übergabevorrichtung gemäss des ersten Typs;
- Figur 4a-4c:: Draufsichten des Fördersystems gemäss Figur 3 in verschiedenen Übergabepositionen;
- Figur 5:: eine Draufsicht eines modifizierten Fördersystems mit einer Übergabevorrichtung gemäss den Figuren 3 und 4a-4c gemäss des ersten Typs;
- Figur 6:: eine Draufsicht eines weiteren Fördersystems mit einer gegenüber der Übergabevorrichtung gemäss den Figuren 3, 4a-4c und 5 leicht modifizierten Übergabevorrichtung gemäss des ersten Typs;
- Figur 7:: eine Draufsicht des als Sortieranlage ausgelegten Fördersystems gemäss den Figuren 3 und 4a-4c;
- Figur 8:: eine Draufsicht eines weiteren Fördersystems mit einer gegenüber der Übergabevorrichtung gemäss den Figuren 3, 4a-4c und 5 leicht modifizierten Übergabevorrichtung gemäss des ersten Typs;
- Figur 9:: Draufsichten eines erfindungsgemässen Fördersystems mit einer Übergabevorrichtung gemäss eines zweiten Typs;
- Figur 10:: Draufsichten eines erfindungsgemässen Fördersystems mit einer Übergabevorrichtung gemäss eines dritten Typs;
- Figur 11:: Draufsichten eines erfindungsgemässen Fördersystems mit einer Übergabevorrichtung gemäss eines vierten Typs;
- Figur 12:: Draufsichten eines erfindungsgemässen Fördersystems mit einer Übergabevorrichtung gemäss eines fünften Typs;
- Figur 13:: Draufsicht eines weiteren erfindungsgemässen Fördersystems.

Grundsätzlich sind in den Figuren gleiche Teile mit gleichen Bezugszeichen versehen. Die Figuren sind lediglich beispielhaft und nicht einschränkend.

Für das Verständnis der Erfindung sind gewisse Merkmale in den Figuren nicht oder nur sehr stark abstrahiert dargestellt. Die nachfolgend beschriebenen Ausführungsbeispiele stehen lediglich beispielhaft für den Erfindungsgegenstand.

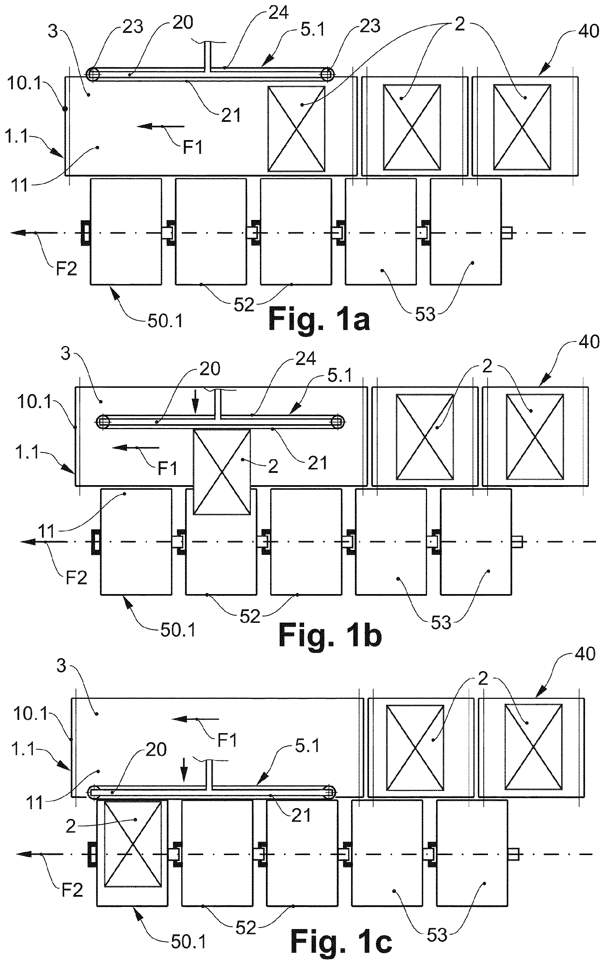

Das Fördersystem gemäss den **Figuren 1a bis 1c** umfasst eine Übergabevorrichtung 1.1 mit einer Übergabefördereinrichtung 10.1 und einer Bereitstellungseinrichtung 40 zum Bereitstellen und Abgeben von einzelnen Fördergütern 2 an die Übergabefördereinrichtung 10.1. Die Übergabevorrichtung 1.1 umfasst ferner eine Ablenkeinrichtung 5.1 zum Ablenken der in Förderrichtung F1 der Übergabefördereinrichtung geförderten Fördergüter 2 quer zur Förderrichtung F1.

Gemäss vorliegender Ausführung ist die Ablenkeinrichtung 5.1 als Schiebeeinrichtung ausgelegt, welche einen über die Auflagefläche der Übergabefördereinrichtung 10.1 bewegbaren Schiebekörper 20 umfasst. Der Schiebekörper 20 enthält ein, eine Kontaktfläche 21 ausbildendes Kontaktorgan 24, über welches ein Schiebekontakt zum Fördergut 2 ausgebildet werden kann. Gemäss vorliegender Ausführungsform erstreckt sich die Kontaktfläche 21 des Schiebekörpers 20 in Förderrichtung F1 der Übergabefördereinrichtung 10.1 über mehrere Förderabteile 52 der Weiterfördervorrichtung 50.1 hinweg.

Die Kontaktfläche 21 des Schiebekörpers 20 ist in Förderrichtung F1 der Übergabefördereinrichtung 10.1 beweglich ausgebildet. Hierzu ist das Kontaktorgan 24 als ein um zwei Umlenkrollen 23 geführtes Kontaktband ausgebildet. Das Kontaktband 24 wird durch das sich in Förderrichtung F1 bewegende Fördergut 2 passiv angetrieben. Dadurch wird eine für das Fördergut 2 problematische Gleitreibung zwischen dem sich in Förderrichtung F1 bewegenden Fördergut 2 und der Kontaktfläche 21 des in Förderrichtung F1 ortsfesten Schiebekörpers 20 vermieden.

Alternativ kann das Kontaktband auch angetrieben sein, insbesondere mit der Fördergeschwindigkeit des Förderguts 2 auf der Übergabefördereinrichtung 10.1. Hierzu kann z. B. mindestens eine der beiden Umlaufrollen 23 mit einem elektrischen Antrieb (nicht gezeigt) angetrieben werden.

Die Weiterfördervorrichtung 50.1 ist als Schalenförderer ausgebildet und umfasst eine Mehrzahl von in Förderrichtung F2 hintereinander angeordneten und gleichmässig voneinander beabstandeten Förderschalen 52. Die miteinander verketteten Förderschalen 52 bilden jeweils Förderabteile mit einer Förderfläche 53 aus. Zur Übergabe der Fördergüter 2 wird im Übergabebereich die zur Übergabefördereinrichtung 10.1 weisende Seitenwand heruntergeklappt.

Die Bereitstellungseinrichtung bzw. der Bereitstellungsförderer 40 enthält einen Bandförderer, mittels welchem die Fördergüter 2 bereitgestellt und an die Übergabefördereinrichtung 10.1 abgegeben werden.

Die Übergabefördereinrichtung 10.1 ist ebenfalls als Bandförderer ausgebildet. Das Förderband des Bandförderers bildet die Auflagefläche 3 bzw. Förderfläche aus. Die Fördergüter 2 liegen zwecks Übergabe an die Weiterfördervorrichtung 50.1 der Förderfläche 3 des Bandförderers auf und werden von diesem in Förderrichtung F1 gefördert. Die Förderbahn der Übergabefördereinrichtung 10.1 verläuft im Übergabebereich, in welchem die Fördergüter 2 übergeben werden, parallel zur Förderbahn der Weiterfördervorrichtung 50.1. Entsprechend sind die Förderrichtungen F1, F2 der Übergabefördereinrichtung 10.1 und der Weiterfördervorrichtung 50.1 im Übergabebereich gleichgerichtet.

Die Übergabefördereinrichtung 10.1 und die Weiterfördervorrichtung 50.1 weisen während der Übergabe der Fördergüter 2 die gleiche Fördergeschwindigkeit auf.

Zur Übergabe eines Fördergutes 2 von der Übergabevorrichtung 10.1 an die Weiterfördervorrichtung 50.1 schiebt der Schiebekörper 20 das auf der Förderfläche 3 des Förderbandes liegende Fördergut 2 quer zur Förderrichtung F1 über die Förderfläche 3 in ein Förderabteil bzw. auf eine Förderschale 52 der Weiterfördervorrichtung 50.1. Dank der sich über mehrere Förderschalen 52 der Weiterfördervorrichtung 50.1 erstreckenden Kontaktfläche 21 des Schiebekörpers 20 erfolgt die Übergabe über mehrere Fördertakte hin weg. Das heisst, während der Übergabe des Fördergutes 2 bewegen sich mehrere Förderschalen 52 am Schiebekörper 20 vorbei.

Die Figuren 1a bis 1c zeigen auch den Ablauf der Übergabe eines Fördergutes 2 an die Weiterfördervorrichtung 50.1. Ein Fördertakt entspricht der Taktzeit, welche ein Förderabteil, hier eine Förderschale 52, benötigt, um sich an einem in Förderrichtung F1, F2 stationären Punkt vorbeizubewegen. Im vorliegenden Beispiel bewegen sich nun mit Beginn des Schiebevorganges drei Förderschalen 52 am Schiebekörper 52 vorbei, bis das Fördergut vollständig in eine Förderschale 52 der Weiterfördervorrichtung 50.1 geschoben und damit übergeben ist. Entsprechend wird das Fördergut 2 über drei Fördertakte hinweg durch der Schiebekörper 20 auf die Förderschale 52 der Weiterfördervorrichtung 50.1 geschoben.

Da sich die Kontaktfläche 21 in Förderrichtung F1 der Übergabefördereinrichtung 10.1 über mehrere Förderabteile hinweg erstreckt, ist auch ein über mehrere Fördertakte hinweg bestehender Schiebekontakt mit dem zu übergebenden Fördergut 2 gewährleistet.

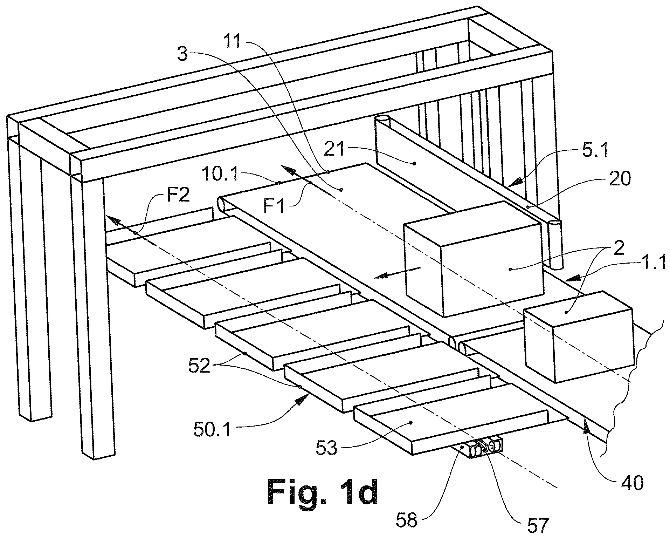

In der **Figur 1d** ist in einer perspektivischen Darstellung noch das Gerüst der Schiebeeinrichtung 5.1 gezeigt, an welcher der Schiebekörper 20 quer zur Förderrichtung F1 beweglich angeordnet ist.

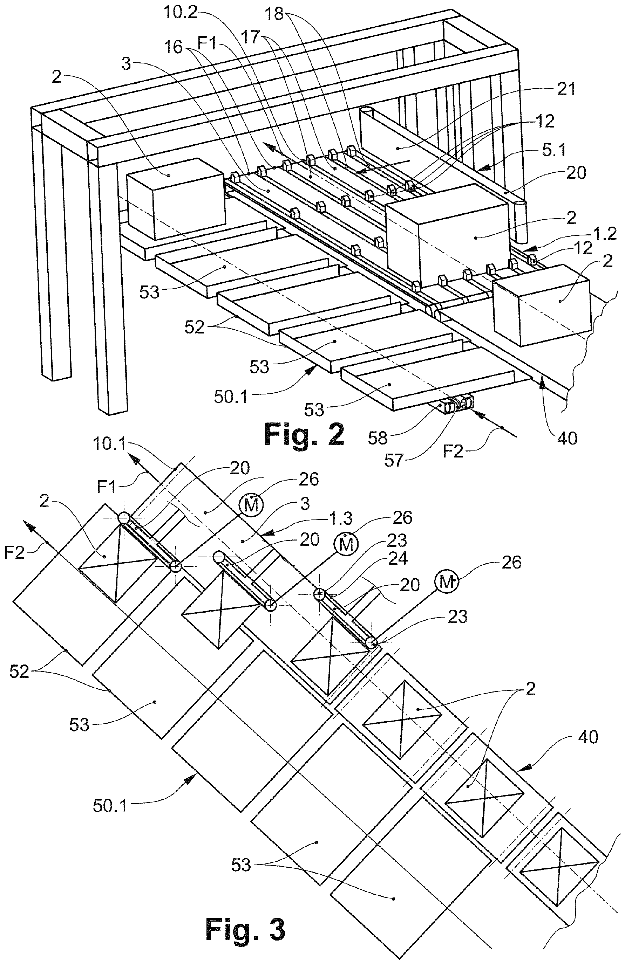

Die Förderschalen sind auf einer Förderkette 57 angeordnet, welche in einem Führungskanal einer Führungsschiene 58 geführt ist (siehe Figur 1d und 2).

Das in **Figur 2** gezeigte Fördersystem entspricht mit Ausnahme der Übergabefördereinrichtung 10.2 dem in den Figuren 1a bis 1d gezeigten Fördersystem. Folglich treffen mit Ausnahme der Ausführungen zur Ausgestaltung der Übergabefördereinrichtung 10.1 sämtliche obigen Erläuterungen zur Ausführungsform gemäss den Figuren 1a bis 1d auch auf diese Ausführungsform zu.

Die Übergabefördereinrichtung 10.2 der Übergabevorrichtung 1.2 weist gemäss der Ausführungsform nach Figur 2 mehrere parallel zueinander verlaufende Bandfördereinheiten 16 mit jeweils einem umlaufenden Förderband bzw. Förderriemen 17 auf. Zwischen den Bandfördereinheiten 16 werden Führungsschlitze 18 bzw. Führungsspalten ausgebildet, in welchen umlaufend geführte und miteinander verkettete Mitnehmer 12 angeordnet sind.

Die Mitnehmer 12 stehen der Auflagefläche 3 der Übergabefördereinrichtung 10.2 vor und bilden jeweils Reihen von in Förderrichtung F1 voneinander beabstandeten Mitnehmern 12 aus. Die Reihen umfassen jeweils eine Mehrzahl von quer zur Förderrichtung F1 in Reihe angeordneten und voneinander beabstandeten Mitnehmern 12. Zwei benachbarte Reihen von Mitnehmern 12 bilden jeweils ein Förderabteil zur Aufnahme eines Fördergutes 2 aus.

Der Schiebekörper 20 ist dazu ausgelegt, sich über die Mitnehmer 12 hinweg über die Auflagefläche der Übergabefördereinrichtung 10.2 zu bewegen.

Die Mitnehmer 12 sind in vorliegender Ausführungsform als Nocken ausgebildet. Die umlaufend geführten und miteinander verketteten Mitnehmer 12 werden über einen nicht gezeigten Antrieb angetrieben.

Die Mitnehmer bewegen sich mit einer höheren Geschwindigkeit in Förderrichtung F1 als die Förderbänder 17 der Bandfördereinheiten 16. Entsprechend laufen die Mitnehmer 12 in Förderrichtung F1 von hinten auf die vom Bereitstellungsförderer 40 an die Übergabefördereinrichtung 10.2 abgegebenen Fördergüter 2 auf und richten diese aus.

Dank den Mitnehmern 12 werden die Fördergüter ausgerichtet an die Förderschalen 52 der Weiterfördervorrichtung 50.1 übergeben. Dadurch wird die Gefahr des Verkantens und ganz allgemein einer fehlerhaften Übergabe der Fördergüter 2 reduziert.

Das in **Figur 3** gezeigte Fördersystem unterscheidet sich vom Fördersystem gemäss den Figuren 1a bis 1d durch die Ausgestaltung der Ablenkeinrichtung 5.2 bzw. Schiebeeinrichtung.

Folglich treffen mit Ausnahme der Ausführungen zur Ausgestaltung der Ablenkeinrichtung 5.2 sämtliche obigen Erläuterungen zur Ausfuhrungsform gemäss den Figuren 1a bis 1d auch auf diese Ausführungsform zu.

Die Schiebeeinrichtung 5.2 enthält im Gegensatz zur Ausführungsform nach Figur 1a bis 1d mehrere in Förderrichtung F1 der Übergabefördereinrichtung 10.1 hintereinander angeordnete Schiebekörper 20. Die Schiebekörper 20 entsprechen vom Grundaufbau dem Schiebekörper 20 gemäss den Figuren 1a bis 1d.

Gemäss vorliegender Ausführungsform erfolgt der Schiebevorgang bzw. der Schiebehub abgestuft bzw. gestaffelt in drei Teilhüben, welche auf drei Schiebekörper 20 verteilt sind. Die jeweiligen Kontaktflächen der Schiebekörper 20 sind in Förderrichtung F1 entsprechend kürzer ausgebildet als in der Ausführungsform gemäss den Figuren 1a bis 1d. So erstrecken sich die Kontaktflächen 21 der Schiebekörper 20 jeweils nicht über die Längsausdehnung eines Förderabteils der Weiterfördervorrichtung 50.1 in Förderrichtung F2.

Die Schiebekörper 20 sind derart dimensioniert und voneinander beabstandet angeordnet, dass sich im Übergabebereich eine entsprechende Anzahl von Förderabteilen 52 der Weiterfördervorrichtung 50.1 in Flucht mit den Schiebekörpern 20 der Übergabevorrichtung 5.2 positionieren lassen.

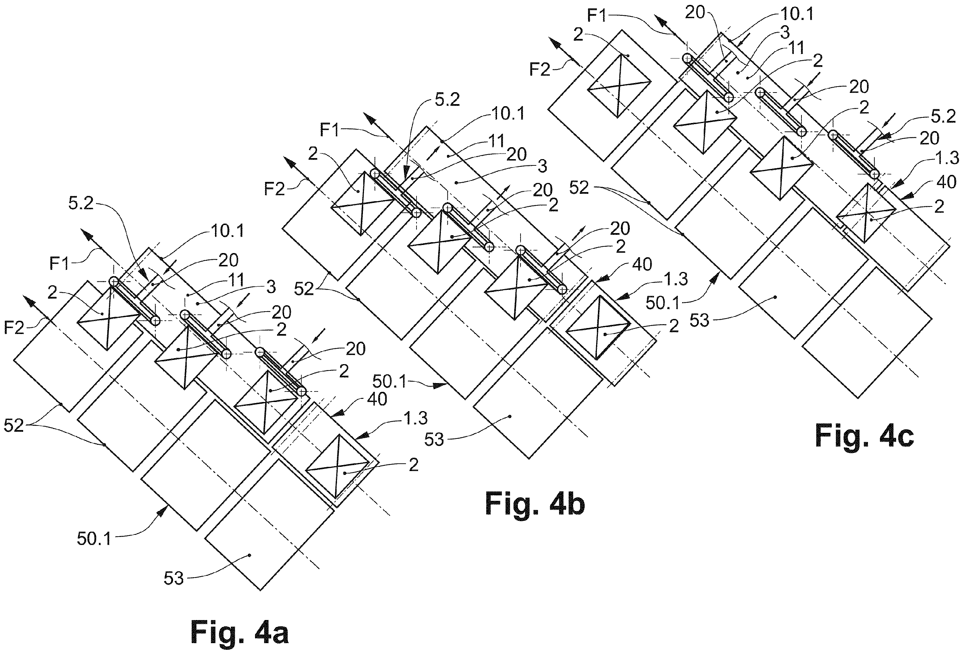

Die **Figuren 4a bis 4c** zeigen beispielhaft die stufenweise Übergabe von Fördergütern 2 in drei Schritten bzw. Teilhüben.

Zur Übergabe eines Fördergutes 2 von der Übergabevorrichtung 1.3 an die Weiterfördervorrichtung 50.1 schiebt der in Förderrichtung F1 der Übergabevorrichtung 1.3 erste Schiebekörper 20 das auf der Förderfläche 3 des Förderbandes liegende Fördergut 2 in einem ersten Teilhub quer zur Förderrichtung F1 über die Förderfläche 3 in Richtung Weiterfördervorrichtung 50.1. Das Fördergut 2 wird dabei weiterhin durch die Übergabefördereinrichtung 10.1 in Förderrichtung F1 weitergefördert, so dass dieses nach Abschluss des ersten Teilhubes in den Wirkbereich des nachfolgenden, zweiten Schiebekörpers 20 gelangt. Der zweite Schiebekörper 20, welcher sich bereits in einer Vorschubposition befindet, die auf Höhe der Position des ersten Schiebekörpers 20 nach Ausführung des Teilhubs liegt, schiebt nun das Fördergut 2 um einen zweiten Teilhub weiter in Richtung Weiterfördervorrichtung 50.1.

Das weiterhin durch die Übergabefördereinrichtung 10.1 kontinuierlich in Förderrichtung F1 weitergeförderte Fördergut 2, gelangt nach Abschluss des zweiten Teilhubes in den Wirkbereich des nachfolgenden, dritten und letzten Schiebekörpers 20. Der dritte Schiebekörper 20, welcher sich ebenfalls bereits in einer Vorschubposition befindet, die auf Höhe der Position des zweiten Schiebekörpers 20 nach Ausführung des Teilhubs liegt, schiebt nun das Fördergut 2 um einen dritten und letzten Teilhub vollständig in das Förderabteil bzw. auf die Förderschale 52 der Weiterfördervorrichtung 50.1.

Die Einnahme einer Vorschubposition durch den zweiten und die nachfolgenden Schiebekörper 20 ist nicht zwingend. Die Hubbewegungen der Schiebekörper 20 bzw. deren Kontaktflächen 21 können jeweils auch aus derselben Ausgangsposition erfolgen.

Im Anschluss an einen Teilhub werden die Schiebekörper 20 jeweils wieder in ihre Ausgangspositionen bzw. Vorschubpositionen zurückbewegt.

Wie in den Figuren 4a bis 4c gezeigt, kann dank der abgestuften Übergabe für mehrere Fördergüter 2 gleichzeitig ein taktsynchrones Übergabeverfahren eingeleitet werden, wobei jeweils ein Fördergut 2 einem Schiebeorgan 20 zugeordnet ist.

Dank der abgestuften bzw. gestaffelten Übergabe der Fördergüter 2 mittels mehreren Schiebekörpern 20 erfolgt eine Übergabe des Fördergutes 2 über mehrere Fördertakte hinweg.

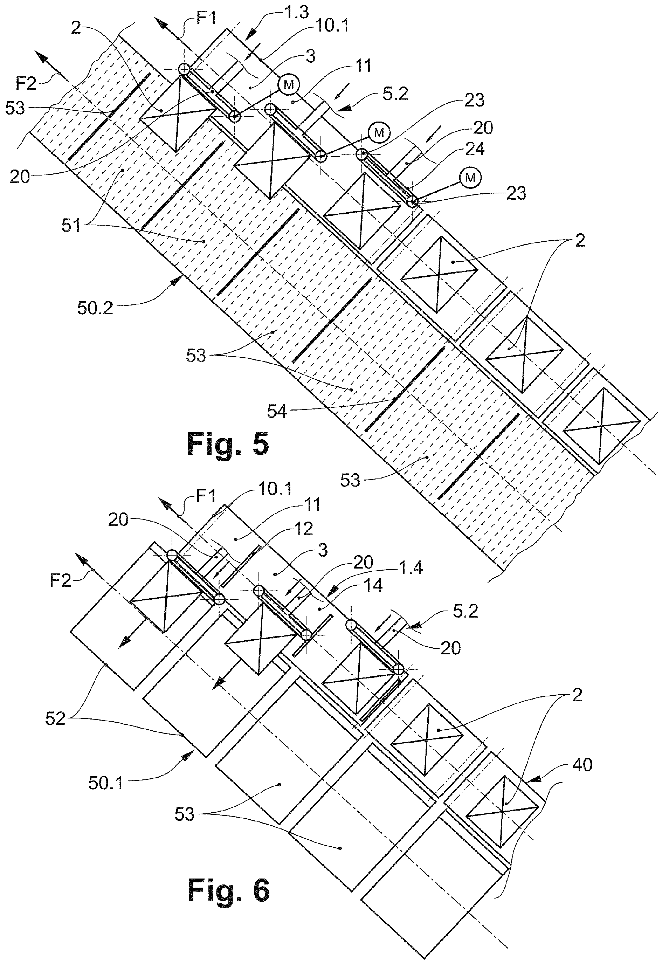

Die Ausführungsform gemäss **Figur 5** unterscheidet sich von der Ausführungsform gemäss den Figuren 3 und 4a bis 4c durch eine andersartige Ausbildung der Weiterfördervorrichtung 50.2. Die Weiterfördervorrichtung 50.2 umfasst einen Modulbandförderer mit einem umlaufenden Modulband. Auf dem Modulband sind diesem vorstehende, quer zur Förderrichtung F2 des Modulbandes verlaufende Trennleisten 54 angeordnet, welche die Förderfläche 53 des Modulbandes in Förderabteile 51 unterteilen.

Die Ausbildung der Übergabevorrichtung 1.3 sowie das dazugehörige Übergabeverfahren korrespondieren mit der Ausführungsform gemäss den Figuren 3 und 4a bis 4c. Entsprechend gilt hierzu die diesbezügliche Offenbarung.

Die Ausführungsform gemäss **Figur 6** unterscheidet sich von der Ausführungsform gemäss den Figuren 3 und 4a bis 4c durch eine andersartige Ausbildung der Übergabefördereinrichtung 10.3. Die Übergabefördereinrichtung 10.3 umfasst ein Modulbandförderer mit einem umlaufenden Modulband. Auf dem Modulband sind diesem vorstehende, quer zur Förderrichtung F1 des Modulbandförderers verlaufende Trennleisten 15 angeordnet, welche die Förderfläche 3 des Modulbandes in Förderabteile 14 unterteilen. Die Bereitstellungseinrichtung 40 gibt die Fördergüter 2 jeweils einzeln in Förderabteile 14 der Übergabefördereinrichtung 10.3 ab.

Die Schiebekörper 20 sind sowohl oberhalb der Förderfläche 3 des Modulbandförderers als auch oberhalb der Trennleisten 15 hinweg quer zur Förderrichtung F1 bewegbar.

Die Ausbildung der Ablenkeinrichtung 5.2 sowie das dazugehörige Übergabeverfahren korrespondieren mit der Ausführungsform gemäss den Figuren 3 und 4a bis 4c. Entsprechend gilt hierzu die diesbezügliche Offenbarung.

Die oben zu den Figuren beschriebenen Kontaktorgane 24, insbesondere Kontaktbänder oder Kontaktrollen, der Schiebekörper 20 können angetrieben sein oder nicht. Umfasst das angetriebene Kontaktorgan 24 ein um zwei Umlenkrollen 23 geführtes Kontaktband 24, so kann mindestens eine der Umlenkrollen 23 über einen elektromotorischen Antrieb 26 angetrieben sein.

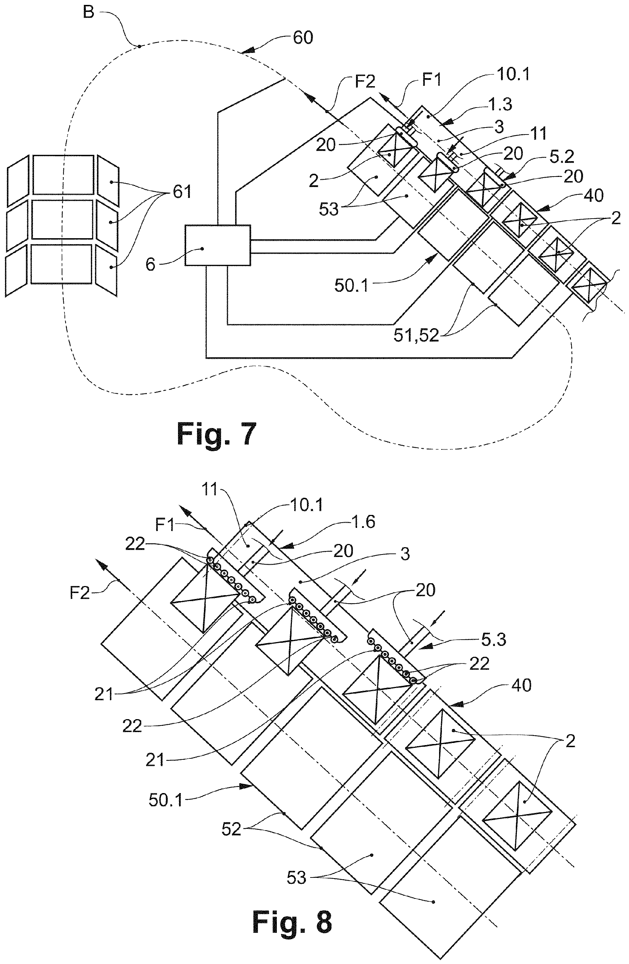

Die **Figur 7** zeigt ein Fördersystem 60 nach Figur 3 und 4a bis 4c, welches als Sortieranlage ausgelegt ist. Die Weiterfördervorrichtung 50.1 ist als Kippschalenförderer mit kippbaren Förderschalen 52 ausgebildet, welcher entlang einer geschlossenen Umlaufbahn B an Abgabestellen 61 eines Abgabebereichs vorbei führt. An den Abgabestellen 61 werden Fördergüter 2 nach vorbestimmten Kriterien durch Kippen der Förderschalen 52 an Übernahmevorrichtungen abgegeben.

Die Vorrichtungen 50.1, 1.3 bzw. Einrichtungen 10.1, 5.2, 40 werden über die gemeinsame Steuerungseinrichtung 6 gesteuert.

Die Ausführungsform gemäss **Figur 8** unterscheidet sich von der Ausführungsform gemäss den Figuren 3 und 4a bis 4c durch eine andersartige Ausbildung des Kontaktorgans der Schiebekörper 20. Das Kontaktorgan wird durch eine Mehrzahl von in Förderrichtung F1 der Übergabefördereinrichtung 10.1 hintereinander angeordneten Kontaktrollen 22 ausgebildet. Die Kontaktrollen 22 bilden entsprechend die Kontaktfläche 21 des Schiebekörpers 20 aus. Die Kontaktrollen 22 können frei drehend gelagert und entsprechend durch das Fördergut 2 passiv antreibbar sein. Die Kontaktrollen 22 können aber auch über mindestens einen Antrieb aktiv angetrieben sein (nicht gezeigt).

Durch die drehbaren Kontaktrollen 22 ist die Kontaktfläche 21 in Förderrichtung F1 beweglich. Dadurch Rollen die Fördergüter 2 an der Kontaktfläche 21 ab, was zu einer Reduktion der Reibung zwischen Fördergut 2 und Schiebeorgan 20 führt.

Die weitere Ausbildung der Übergabevorrichtung 1.6 sowie das dazugehörige Übergabeverfahren korrespondieren mit der Ausführungsform gemäss den Figuren 3 und 4a bis 4c. Entsprechend gilt hierzu die diesbezügliche Offenbarung.

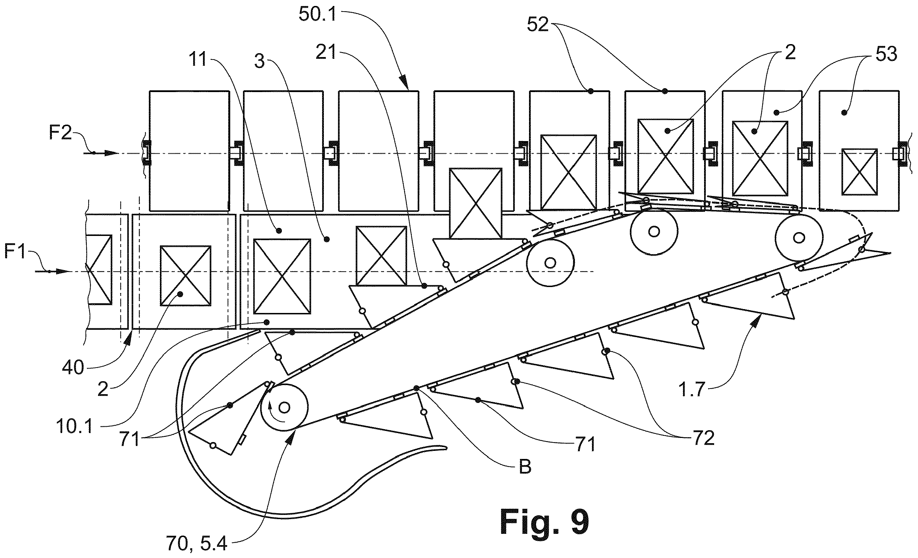

In der Ausführungsform gemäss **Figur 9** ist die Ablenkeinrichtung 5.4 der Übergabevorrichtung 1.7 als Rundlauf 70 mit einer Mehrzahl von entlang einer geschlossenen Umlaufbahn B voneinander beabstandet bewegbaren und miteinander verketteten Schiebekörpem 71 ausgebildet. Die miteinander verketteten Schiebekörper 71 sind um Umlenkrollen geführt.

Der Rundlauf ist oberhalb der Auflagefläche der Übergabefördereinrichtung 10.1 angeordnet.

Der Rundlauf 70 ist so ausgebildet, dass die Schiebekörper 71 in ihrem Wirkbereich, in welchem diese die Fördergüter 2 zur Weiterfördervorrichtung 50.1 schieben, sowohl eine Bewegungskomponente quer zur Förderrichtung F1 der Übergabefördereinrichtung 10.1 als auch eine Bewegungskomponente in Förderrichtung F1 aufweisen.

Die Bewegungsbahn B der Schiebekörper 71 ist oberhalb der Auflagefläche der Übergabefördereinrichtung 10.1 sowie parallel zu dieser angeordnet.

Der Schiebekörper 71 enthält jeweils ein Kontaktorgan mit einer Kontaktfläche 21 zur Ausbildung eines Schiebekontaktes mit dem zu übergebenen Fördergut 2. Die Kontaktfläche 21 bzw. das Kontaktorgan ist unter anderem über ein Knickgelenk 72 mit einem Stützorgan am Rundlauf 70 verbunden. Das Knickgelenk 72 gewährleistet eine zur Förderrichtung F1 der Übergabefördereinrichtung 10.1 parallele Ausrichtung und Führung der Kontaktfläche 21 entlang einer Kurvenbahn.

Je nach Neigungswinkel der Bewegungsbahn B der Schiebekörper 71 gegenüber der Förderrichtung F1 der Übergabefördereinrichtung 10.1 ist das Knickgelenk 72 in einer geknickten oder gestreckten Position. Das Knickgelenk 72 ist mittels eines nicht gezeigten Federelements vorgespannt und wird selbsttätig durch die auf das Knickgelenk 72 wirkende Federkraft in die getreckte Position zurückgeführt bzw. in dieser gehalten.

Die Betätigung des Knickgelenks 72 kann über eine nicht gezeigte Kulissenführung erfolgen, welche das Knickgelenk 72 entgegen der Federkraft des rückstellenden Federelements in eine geknickte Position bringt.

Zur Übergabe von Fördergütern 2 werden die Schiebekörper 71 des Rundlaufs 70 entlang ihrer Bewegungsbahn B bewegt, wobei sich diese einerseits in Richtung Weiterfördervorrichtung 50.1 und andererseits in Förderrichtung F1 der Übergabefördereinrichtung 10.1 bewegen. Die Geschwindigkeit der Bewegung in Förderrichtung F1 der Übergabefördereinrichtung 10.1 entspricht der Fördergeschwindigkeit der Übergabefördereinrichtung 10.1. Die Schiebekörper 71 schieben dabei jeweils ein Fördergut 2 quer zur Förderrichtung F1 der Übergabefördereinrichtung 10.1 zur Weiterfördervorrichtung 50.1.

Die Schiebekörper 71 sind im Wirkbereich insbesondere auf die Förderschalen 52 der Weiterfördervorrichtung 50.1 ausgerichtet und bewegen sich taktsynchron zu diesen. Entsprechend weisen die Schiebekörper 71 im Wirkbereich die gleiche Teilung auf wie die Förderschalen 52 der Weiterfördervorrichtung 50.1.

Am Ende ihres Wirkbereiches werden die Schiebekörper 71 entlang ihrer Umlaufbahn B über einen Rücklauf wieder an den Anfang des Wirkbereichs zurückgeführt. Für den Schiebekörper 71 beginnt ein neuer Schiebezyklus.

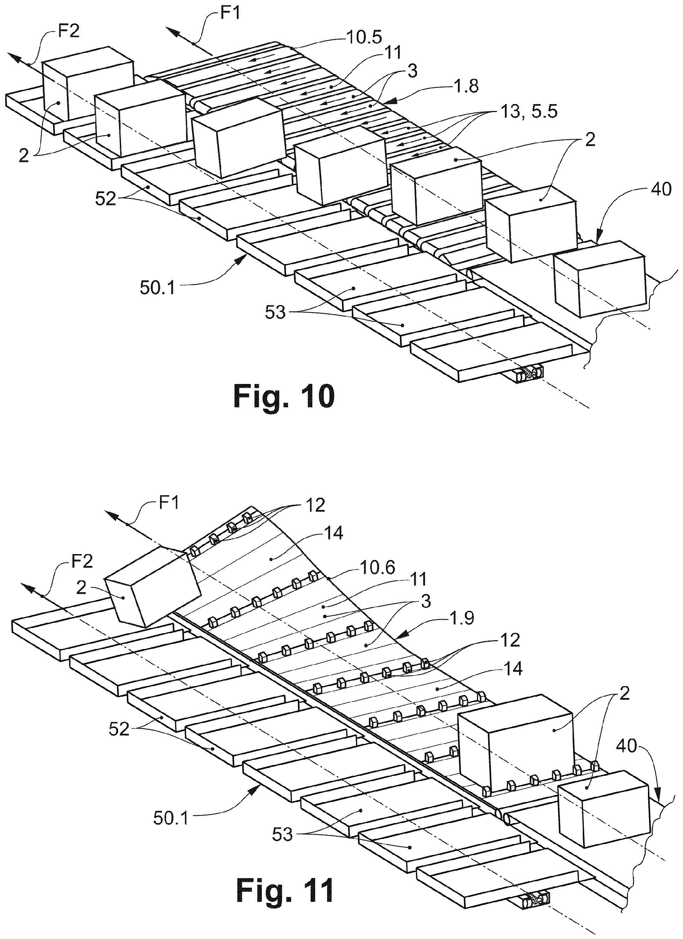

Beim Fördersystem gemäss **Figur 10** sind die Übergabefördereinrichtung 10.5 und die Ablenkeinrichtung 5.5 der Übergabevorrichtung 1.8 in einen Quergurtförderer integriert.

Der Quergurtförderer enthält ein um Umlenkrollen geführtes, umlaufendes Förderorgan 11, welches eine Förderfläche 3 zum Fördern von Fördergüter 2 in Förderrichtung F1 ausbildet. Das Förderorgan 11 setzt sich aus einer Mehrzahl von in Förderrichtung F1 hintereinander angeordneten Querfördereinheiten 13 zum Bewegen der Fördergüter 2 quer zur Förderrichtung F1 in die Förderschalen 52 der Weiterfördervorrichtung 50.1.

Die Querfördereinheiten 13 sind also Teil eines umlaufenden Förderorgans 11 der Übergabefördereinrichtung 10.5. Das heisst, die Querfördereinheiten 13 selbst werden als Teil des Förderorgans 11 entlang einer geschlossenen Umlaufbahn bewegt. Die Querfördereinheiten 13 bilden dabei die Förderfläche 3 des Förderorgans 11 aus.

Die Querfördereinheiten 13 selbst umfassen jeweils um Umlenkrollen geführte Querfördergurten.

Die Bereitstellungsfördereinrichtung 40 und die Weiterfördervorrichtung 50.1 entsprechen den korrespondierenden Einrichtungen bzw. Vorrichtungen gemäss Figur 1a-1d. Entsprechend gilt hierzu die diesbezügliche Offenbarung.

Die Breite der Quergurten der Querfördereinheiten 13 in Förderrichtung F1 ist kleiner als die Breite der Förderabteile 52 der Weiterfördervorrichtung 50.1 in Förderrichtung F2.

Zur Übergabe der Fördergüter 2 an die Weiterfördervorrichtung 50.1 werden die Quergurten über einen Antrieb angetrieben, insbesondere gruppenweise angetrieben, Dabei bewegen sich die Quergurtabschnitte der Quergurten, welche die Förderfläche 3 ausbilden, und mit diesen das auf den Querguten liegende Fördergut 2 quer zur Förderrichtung F1 der Übergabefördereinrichtung 10.5 in Richtung Weiterfördervorrichtung 50.1. Das Förderorgan 11 mit den Quergurteinheiten 13 weist dabei dieselbe Fördergeschwindigkeit wie die Weiterfördervorrichtung 50.1 auf.

Das Fördersystem gemäss **Figur 11** zeichnet sich durch eine Ablenkeinrichtung in Ausführung einer Schrägstellungsanordnung aus, welche in einem Übergabebereich die Förderfläche 3 und folglich das flächige Förderorgan 11 zwecks Übergabe der Fördergüter 2 an die Weiterfördervorrichtung 50.1 aus einer horizontalen Lage in eine geneigte Lage überführt. Die Schrägstellungsanordnung ist unterhalb des Förderorgans 11 angeordnet.

Das Förderorgan 11 ist im Übergabebereich der Übergabevorrichtung 1.9 entsprechend zur Weiterfördervorrichtung 50.1 hin geneigt, so dass ein dem Förderorgan 11 aufliegendes Fördergut 2 quer zur Förderrichtung F1 der Übergabefördereinrichtung 10.6 in ein Förderabteil 52 der Weiterfördervorrichtung 50.1 abrutscht.

Das flächige Förderorgan 11 geht also von einer quer zur Förderrichtung F1 horizontalen Lage kontinuierlich in eine zur Weiterfördervorrichtung 50.1 hin geneigte Lage über, wobei das flächige Förderorgan 11 eine tordierte Form annimmt.

Im Anschluss an die geneigte Position bzw. Lage im Übergabebereich wird das Förderorgan 11 durch die Schrägstellungsanordnung in gleicher Weise wieder in eine quer zur Förderrichtung F1 horizontale Position bzw. Lage zurückgeführt (nicht gezeigt).

Auf dem Förderorgan 11 sind Leitelemente 12 angebracht, welche der Förderfläche 3 des Förderorgans 11 vorstehen. Die Leitelemente 12 sind jeweils in Reihen angeordnet, welche in Förderrichtung F1 voneinander beabstandet sind. Eine Reihe umfasst jeweils eine Mehrzahl von quer zur Förderrichtung F1 in Reihe angeordneten und voneinander beabstandeten Leitelementen 12. Zwei benachbarte Reihen von Leitelementen 12 bilden jeweils ein Förderabteil bzw. Aufnahmeabteil zur Aufnahme eines Fördergutes 2 aus. Die Leitelemente 12 leiten das abrutschende Fördergut 2 quer zur Förderrichtung F1 in das vorgesehene Förderabteil 52 der Weiterfördervorrichtung 50.1. Sie verhindern insbesondere ein Abrutschen der Fördergüter 2 entgegen der Förderrichtung F1.

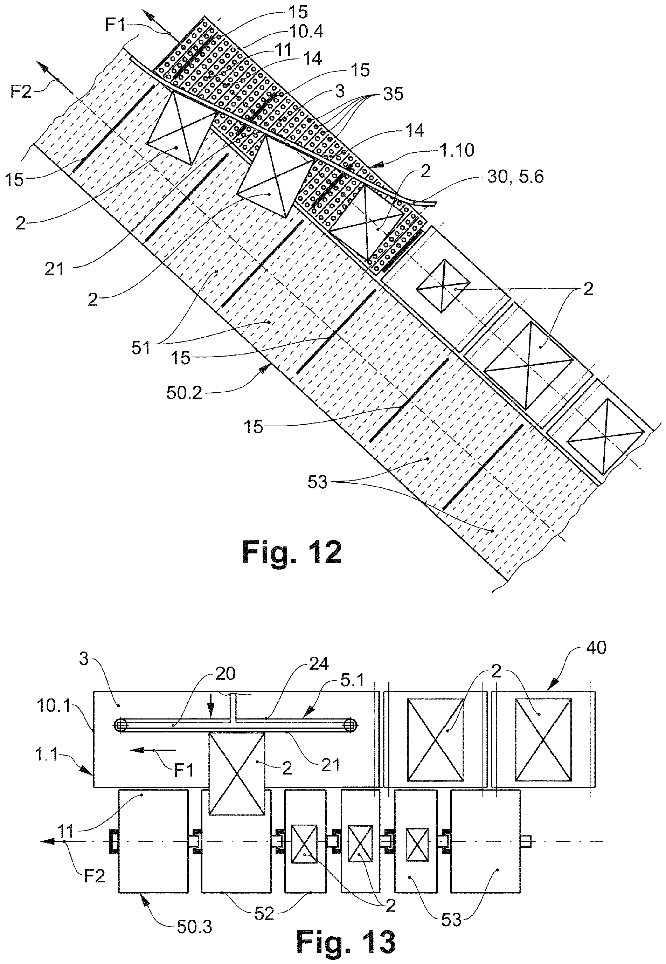

Die Ausführungsform gemäss **Figur 12** enthält eine Übergabevorrichtung 1.10 mit einer Übergabefördereinrichtung 10.4, welche ein in Förderrichtung F1 umlaufend geführtes Förderorgan 11 umfasst. Das Förderorgan 11 enthält eine Mehrzahl von quer zur Förderrichtung F1 frei drehbar gelagerten Auflagerollen 35, welche in Form eines Rollenteppichs in das Förderorgan 11 integriert sind. Die Auflagerollen 35 bilden die Auflage- bzw. Förderfläche 3 des Förderorgans 11 aus.

Am Förderorgan 11 sind ferner eine Mehrzahl von quer zur Förderrichtung F1 verlaufende und voneinander beabstandete Trennleisten 15 angeordnet. Die Trennleisten 15 bilden jeweils Förderabteile 14 für die Fördergüter 2 aus.

Oberhalb der Auflagefläche 3 ist eine Ablenkeinrichtung 5.6 in Ausführung eines ortsfesten Querleitkörpers 30 angeordnet. Der Querleitkörper 30 lenkt Fördergüter 2, welche mit der Übergabefördereinrichtung 10.4 in Förderrichtung F1 gefördert werden, quer zur Förderrichtung F1 in Förderabteile 51 einer Weiterfördervorrichtung 50.2.

Der Querleitkörper 30 enthält eine Kontaktfläche 21 zur Ausbildung eines Ablenkkontaktes mit den Fördergütern 2. Die Kontaktfläche 21 ist schräg über die Auflage- bzw. Förderfläche 11 gerichtet und weist eine Richtungskomponente in Förderrichtung F1 und eine Richtungskomponente quer zur Förderrichtung F1 auf.

Der Querleitkörper 30 sorgt für eine passive Ablenkung der Fördergüter 2 quer zur Förderrichtung F1, indem ein in Förderrichtung F1 gegen den Querleitkörper 30 gefördertes Fördergut 2 durch den Querleitkörper quer zur Förderrichtung F1 zur Weiterfördervorrichtung 50.2 hin abgedrängt wird.

Die quer zur Förderrichtung F1 drehbar gelagerten Auflagerollen 35 unterstützen dabei die Ablenkung der Fördergüter 2 quer zur Förderrichtung F1, indem die Fördergüter 2 quer zur Förderrichtung F1 auf den Auflagerollen 35 reibungsarm abrollen können.

Die Auflagerollen 35 können quer zur Förderrichtung F1 auch aktiv angetrieben sein.

Die Weiterfördervorrichtung 50.2 entspricht der Weiterfördervorrichtung gemäss Figur 5 und umfasst ein Modulbandförderer mit einem umlaufenden Modulband. Auf dem Modulband sind diesem vorstehende, quer zur Förderrichtung F2 des Modulbandes verlaufende Trennleisten 12 angeordnet, welche die Förderfläche des Modulbandes in Förderabteile 51 unterteilen.

Die Fördergüter 2 werden durch den Querleitkörper 30 quer zur Förderrichtung F1 der Übergabefördereinrichtung 10.4 in Förderabteile 51 der Weiterfördervorrichtung 50.2 abgelenkt.

Die Förderabteile 14 der Übergabefördereinrichtung 10.4 sind auf die Förderabteile 51 der Weiterfördervorrichtung 50.2 ausgerichtet Die Förderabteile 14 der Übergabefördereinrichtung 10.4 und die Förderabteile 51 der Weiterfördervorrichtung 50.2 weisen entsprechend dieselbe Teilung auf.

Die Förderabteile 14 der Übergabefördereinrichtung 10.4 bewegen sich taktsynchron mit den Förderabteilen 51 der Weiterfördervorrichtung 50.2. Die Übergabefördereinrichtung 10.4 und die Weiterfördervorrichtung 50.2 weisen entsprechend dieselbe Fördergeschwindigkeit auf.

Grundsätzlich können die in den Figuren gezeigten Übergabevorrichtungen mit anderen offenbarten Weiterfördervorrichtungen als die in den jeweiligen Figuren gezeigten Weiterfördervorrichtungen kombiniert werden. Die Weiterfördervorrichtungen bilden aber bevorzugt Förderabteile für einzelne Fördergüter 2 aus.

Ebenso können die in den Figuren gezeigten Ablenkeinrichtungen mit anderen offenbarten Übergabefördereinrichtungen als die in den jeweiligen Figuren gezeigten Übergabefördereinrichtungen kombiniert werden.

Die Figur 13 zeigt ein Fördersystem mit einer Übergabevorrichtung 1.1, wie sie beispielsweise in den Figuren 1a bis 1d gezeigt ist, sowie mit einer Weiterfördervorrichtung 50.3. Die Weiterfördervorrichtung 50.3 unterscheidet sich von der Weiterfördervorrichtung 50.1 gemäss den Figuren 1a bis 1d durch Förderschalen 52 von unterschiedlicher Grösse, d.h. von unterschiedlicher Länge in Förderrichtung F2.

Damit wird dem Umstand Rechnung getragen, dass die Fördergüter 2 unterschiedliche Grössen aufweisen können. Über die Steuerungseinrichtung wird sichergestellt, dass die Fördergüter 2 an Förderabteile 52 der Weiterfördervorrichtung 50.3 übergeben werden, welche eine ausreichende Grösse aufweisen.

Dank einer Weiterfördervorrichtung 50.3 mit unterschiedlich grossen Förderabteilen bzw. Förderschalen 52 lässt sich die Förderkapazität erhöhen, indem nicht mehr alle Förderschalen 52 die Grösse des grösstmöglichen Förderguts 2 aufweisen, wie dies bei Weiterfördervorrichtungen 50.1 mit gleich grossen Förderschalen der Fall ist.

Gemäss Figur 13 sind einzelne Förderschalen 52 beim Eintreffen im Übergabebereich bereits mit Fördergütern 2 belegt. Entsprechend werden mittels der Übergabevorrichtung 1.1 lediglich an leere Förderplätze bzw. Förderschalen 52 Fördergüter 2 übergeben.

## Patentansprüche

1. **Vorrichtung** (1.1-1.10) zur Übergabe von einzelnen Fördergütern (2), insbesondere Liegeware, an eine Weiterfördervorrichtung (50.1-50.2), insbesondere an einen Sorter, enthaltend eine Übergabefördereinrichtung (10.1-10.5) mit einer Auflagefläche (3) für die Fördergüter (2) zum liegenden Fördern der Fördergüter (2) in eine Förderrichtung (F1) und eine Ablenkeinrichtung (5.1-5.6) zum Ablenken, und insbesondere zum Bewegen der Fördergüter (2) quer zur Förderrichtung (F1) auf eine Auflagefläche (53) der Weiterfördervorrichtung (50.1-50.2).

2. Vorrichtung nach Anspruch 1, **dadurch gekennzeichnet, dass** die Übergabefördereinrichtung (10.2-10.4) Mitnehmerelemente (12) zur Mitnahme der Fördergüter (2) in Förderrichtung (F1) enthält, welche der Auflagefläche (3) vorstehen.

3. Vorrichtung nach einem der Ansprüche 1 bis 2, **dadurch gekennzeichnet, dass** die Ablenkeinrichtung (5.1-5.4) mindestens einen Schiebekörper (20, 71) zum Schieben der Fördergüter (2) quer zur Förderrichtung (F1) über die Auflagefläche (3) der Übergabefördereinrichtung (10.1-10.5) auf eine Auflagefläche (53) der Weiterfördervorrichtung (50.1-50.2) enthält.

4. Vorrichtung nach Anspruch 3, **dadurch gekennzeichnet, dass** die Ablenkeinrichtung (5.2) mehrere, in Förderrichtung (F1) hintereinander angeordnete Schiebekörper (20) für ein abgestuftes Schieben der Fördergüter (2) quer zur Förderrichtung (F1) auf eine Auflagefläche (53) der Weiterfördervorrichtung (50.1-50.2) enthält.

5. Vorrichtung nach einem der Ansprüche 1 bis 4, **dadurch gekennzeichnet, dass** die Ablenkeinrichtung (5.5) einen Rundlauf (70) mit mehreren entlang einer geschlossenen Bewegungsbahn (B) hintereinander angeordneten Schiebekörpern (71) zum Schieben der Fördergüter (2) quer zur Förderrichtung (F1) auf eine Auflagefläche (53) der Weiterfördervorrichtung (50.1) enthält.

6. Vorrichtung nach Anspruch 5, **dadurch gekennzeichnet, dass** die Bewegungsbahn (B) der Schiebekörper (71), und insbesondere der Rundlauf (70) oberhalb der Auflagefläche (3) angeordnet ist und die Bewegungsbahn (B) der Schiebekörper (71) insbesondere parallel zur Auflagefläche (3) der Übergabefördereinrichtung (10.1) angeordnet ist.

7. Vorrichtung nach einem der Ansprüche 3 bis 6, **dadurch gekennzeichnet, dass** der mindestens eine Schiebekörper (20) eine in Förderrichtung (F1) bewegliche Kontaktfläche (21) ausbildet, welche mit einem in Förderrichtung (F1) mit der Übergabefördereinrichtung (10.1-10.5) geförderten Fördergut (2) mitbewegbar ist.

8. Vorrichtung nach Anspruch 7, **dadurch gekennzeichnet, dass** die bewegliche Kontaktfläche (21) durch mindesten eine Kontaktrolle (22) oder mindestens ein um wenigstens zwei Umlenkrollen (23) geführtes Kontaktband (24) ausgebildet wird.

9. Vorrichtung nach einem der Ansprüche 1 bis 8, **dadurch gekennzeichnet, dass** die Auflagefläche (3) durch eine Mehrzahl von Auflagerollen (35), insbesondere durch einen Rollenteppich oder Rollenbahn aus mehreren Auflagerollen (35) ausgebildet wird.

10. Vorrichtung nach einem der Ansprüche 1 bis 9, **dadurch gekennzeichnet, dass** die Übergabefördereinrichtung (10.5) eine Mehrzahl von in Förderrichtung (F1) nebeneinander angeordneten Querfördereinheiten (13) zum Bewegen der Fördergüter (2) quer zur Förderrichtung (F1) auf eine Auflagefläche (53) der Weiterfördervorrichtung (50) enthält.

11. Vorrichtung nach einem der Ansprüche 1 bis 10, **dadurch gekennzeichnet, dass** die Übergabefördereinrichtung (10.2-10.4) Förderabteile (14) ausbildet, und die Förderabteile (14) in Förderrichtung (F1) insbesondere durch Trennorgane (12) begrenzt werden.

12. **Fördersystem** (60) enthaltend eine Vorrichtung (1.3) zur Übergabe von Fördergütern (2) an eine Weiterfördervorrichtung (50.1) gemäss einem der Ansprüche 1 bis 11 und eine Weiterfördervorrichtung (50.1).

13. Fördersystem nach Anspruch 12, **dadurch gekennzeichnet, dass** die Weiterfördervorrichtung (50.1) in Förderrichtung (F2) hintereinander angeordnete Förderabteile (51, 52) zur Aufnahme jeweils eines Fördergutes (2) ausbildet und die Weiterfördervorrichtung (50.1) insbesondere ein Schalenförderer, ganz besonders ein Kippschalenförderer ist, wobei die Förderabteile (51) durch Förderschalen (52) ausgebildet werden.

14. Fördersystem nach einem der Ansprüche 12 bis 13, **dadurch gekennzeichnet, dass** das Fördersystem (60) ein Sortiersystem zur gezielten Verteilung von Fördergütern (2) und die Weiterfördervorrichtung (50.1) ein Sorter ist.

15. **Verfahren** zur Übergabe von Fördergütern (2) an eine Weiterfördervorrichtung (50.1-50.2) mittels einer Vorrichtung nach einem der Ansprüche 1 bis 11,
**dadurch gekennzeichnet, dass**
mindestens ein auf der Auflagefläche (3) der Übergabefördereinrichtung (10.1-10.5) liegend gefördertes Fördergut (1) mittels der Ablenkeinrichtung (5.1-5.6) quer zur Förderrichtung (F1) der Übergabefördereinrichtung (10.1-10.5) ausgelenkt und auf eine Auflagefläche (53) der Weiterfördervorrichtung (50.1-50.2) übergeben wird.

16. Verfahren nach Anspruch 15, **dadurch gekennzeichnet, dass** mittels einer Steuerungseinrichtung (6) unter Berücksichtigung der Position und Fördergeschwindigkeit der Förderabteile (51) der Weiterfördervorrichtung (50.1) eine taktsynchrone Übergabe der Fördergüter (2) in die an der Übergabefördereinrichtung (10.1) vorbei bewegten Förderabteile (51) der Weiterfördervorrichtung (50.1) erfolgt.
